(19) Europäisches Patentamt
European Patent Office
Office européen des brevets

(11) **EP 4 651 597 A1**

(12) **EUROPEAN PATENT APPLICATION**
published in accordance with Art. 153(4) EPC

(43) Date of publication:
**19.11.2025 Bulletin 2025/47**

(21) Application number: **24741318.0**

(22) Date of filing: **11.01.2024**

(51) International Patent Classification (IPC):
**H04W 72/12** (2023.01)

(52) Cooperative Patent Classification (CPC):
**H04J 13/00; H04L 5/00; H04W 72/12**

(86) International application number:
**PCT/CN2024/071766**

(87) International publication number:
**WO 2024/149322 (18.07.2024 Gazette 2024/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.01.2023 CN 202310041751**

(71) Applicant: **Vivo Mobile Communication Co., Ltd.
Dongguan, Guangdong 523863 (CN)**

(72) Inventors:
• **ZHENG, Kaili**
  **Dongguan, Guangdong 523863 (CN)**
• **SUN, Rongrong**
  **Dongguan, Guangdong 523863 (CN)**

(74) Representative: **Conti, Marco
Bugnion S.p.A.
Via di Corticella, 87
40128 Bologna (IT)**

(54) **PHASE-TRACKING REFERENCE SIGNAL TRANSMISSION METHOD AND APPARATUS, TERMINAL AND NETWORK SIDE DEVICE**

(57) This application discloses a phase tracking reference signal transmission method and apparatus, a terminal, and a network-side device, pertaining to the field of communications technologies. The phase tracking reference signal transmission method of the embodiments of this application includes: determining, by a terminal, a transmission parameter for a PTRS; and sending, by the terminal, the PTRS based on the transmission parameter, or receiving, by the terminal, the PTRS based on the transmission parameter; where the PTRS includes at least one PTRS port, and the transmission parameter includes at least one of the following: a frequency domain resource offset corresponding to the PTRS port on a first DMRS port, an EPRE ratio of the PTRS port to a transmission channel, and a DMRS port associated with the PTRS port; and the first DMRS is a DMRS that multiplexes a port in a same CDM group by using a first FD-OCC sequence, a length of the first FD-OCC sequence is greater than 2, the transmission channel includes a PDSCH or a PUSCH, a maximum number of data streams supported by the PDSCH is greater than 6, a maximum number of data streams supported by the PUSCH is greater than 4, and the DMRS port associated with the PTRS port is used for transmitting the PUSCH.

A terminal determines a transmission parameter for a PTRS — 201

The terminal sends the PTRS based on the transmission parameter, or the terminal receives the PTRS based on the transmission parameter — 202

FIG. 2

**Description**

**CROSS-REFERENCE TO RELATED APPLICATIONS**

This application claims priority to Chinese Patent Application No. 202310041751.7, filed in China on January 11, 2023, which is incorporated herein by reference in its entirety.

**TECHNICAL FIELD**

This application pertains to the field of communications technologies, and specifically, relates to a phase tracking reference signal transmission method and apparatus, a terminal, and a network-side device.

**BACKGROUND**

In high-frequency communications such as millimeter waves, the hardware implementation of the analog front end is a significant challenge. For example, high-frequency crystal oscillators may produce substantial phase noise, which disrupts orthogonality of orthogonal frequency division multiplexing (Orthogonal Frequency Division Multiplexing, OFDM) symbol subcarriers. Therefore, phase-tracking reference signal (Phase-tracking Reference Signal, PTRS) is introduced to estimate phase noise, and the receiver can suppress and eliminate the phase noise based on a PTRS estimation result.

At present, to improve an overall throughput in the network, it is necessary to enhance the number of cooperative users and the total number of data streams in multiple-input multiple-output (Multiple-Input Multiple-Output, MIMO) transmission, so that the number of demodulation reference signal (Demodulation Reference Signal, DMRS) ports and the maximum number of data streams for a data channel supported by each user also need to be increased. However, due to close association between the PTRS and the DMRS, there is no corresponding solution to how to transmit the PTRS in a case that the number of DMRS ports, the maximum number of data streams supported by the data channel, and the like increase, thus affecting accuracy of phase noise estimation.

**SUMMARY**

Embodiments of this application provide a phase tracking reference signal transmission method and apparatus, a terminal, and a network-side device, which can provide a PTRS transmission scheme in a case that the number of DMRS ports, the maximum number of data streams supported by a data channel, and the like are increased, so as to ensure accuracy of phase noise estimation.

According to a first aspect, a phase tracking reference signal transmission method is provided, where the method includes:

determining, by a terminal, a transmission parameter for a phase tracking reference signal PTRS; and
sending, by the terminal, the PTRS based on the transmission parameter, or receiving, by the terminal, the PTRS based on the transmission parameter; where
the PTRS includes at least one PTRS port, and the transmission parameter includes at least one of the following: a frequency domain resource offset for the PTRS port corresponding to a first DMRS port, an energy per resource element (Energy Per Resource Element, EPRE) ratio of the PTRS port to a transmission channel, and a DMRS port associated with the PTRS port; and
the first DMRS is a DMRS that multiplexes a port in a same code division multiplexing (Code Division Multiplexing, CDM) group by using a first frequency domain orthogonal cover code (Frequency Domain Orthogonal Cover Code, FD-OCC) sequence, a length of the first FD-OCC sequence is greater than 2, the transmission channel includes a physical downlink shared channel (Physical Downlink Shared Channel, PDSCH) or a physical uplink shared channel (Physical Uplink Sharing Channel, PUSCH), a maximum number of data streams supported by the PDSCH is greater than 6, a maximum number of data streams supported by the PUSCH is greater than 4, and the DMRS port associated with the PTRS port is used for transmitting the PUSCH.

According to a second aspect, a phase tracking reference signal transmission apparatus is provided, where the apparatus includes:

a first determining module, configured to determine a transmission parameter for a phase tracking reference signal PTRS; and
a first transmission module, configured to send the PTRS based on the transmission parameter, or receive, for the terminal, the PTRS based on the transmission parameter; where

the PTRS includes at least one PTRS port, and the transmission parameter includes at least one of the following: a frequency domain resource offset for the PTRS port corresponding to a first demodulation reference signal DMRS port, an energy per resource element EPRE ratio of the PTRS port to a transmission channel, and a DMRS port associated with the PTRS port; and

the first DMRS is a DMRS that multiplexes a port in a same code division multiplexing CDM group by using a first frequency domain orthogonal cover code FD-OCC sequence, a length of the first FD-OCC sequence is greater than 2, the transmission channel includes a physical downlink shared channel PDSCH or a physical uplink shared channel PUSCH, a maximum number of data streams supported by the PDSCH is greater than 6, a maximum number of data streams supported by the PUSCH is greater than 4, and the DMRS port associated with the PTRS port is used for transmitting the PUSCH.

According to a third aspect, a phase tracking reference signal transmission method is provided, where the method includes:

determining, by a network-side device, a transmission parameter for a phase tracking reference signal PTRS; and receiving, by the network-side device, the PTRS based on the transmission parameter, or sending, by the network-side device, the PTRS based on the transmission parameter; where
the PTRS includes at least one PTRS port, and the transmission parameter includes at least one of the following: a frequency domain resource offset for the PTRS port corresponding to a first demodulation reference signal DMRS port, an energy per resource element EPRE ratio of the PTRS port to a transmission channel, and a DMRS port associated with the PTRS port; and
the first DMRS is a DMRS that multiplexes a port in a same code division multiplexing CDM group by using a first frequency domain orthogonal cover code FD-OCC sequence, a length of the first FD-OCC sequence is greater than 2, the transmission channel includes a physical downlink shared channel PDSCH or a physical uplink shared channel PUSCH, a maximum number of data streams supported by the PDSCH is greater than 6, a maximum number of data streams supported by the PUSCH is greater than 4, and the DMRS port associated with the PTRS port is used for transmitting the PUSCH.

According to a fourth aspect, a phase tracking reference signal transmission apparatus is provided, where the apparatus includes:

a second determining module, configured to determine a transmission parameter for a phase tracking reference signal PTRS; and
a second transmission module, configured to receive the PTRS based on the transmission parameter, or send the PTRS based on the transmission parameter; where
the PTRS includes at least one PTRS port, and the transmission parameter includes at least one of the following: a frequency domain resource offset for the PTRS port corresponding to a first demodulation reference signal DMRS port, an energy per resource element EPRE ratio of the PTRS port to a transmission channel, and a DMRS port associated with the PTRS port; and
the first DMRS is a DMRS that multiplexes a port in a same code division multiplexing CDM group by using a first frequency domain orthogonal cover code FD-OCC sequence, a length of the first FD-OCC sequence is greater than 2, the transmission channel includes a physical downlink shared channel PDSCH or a physical uplink shared channel PUSCH, a maximum number of data streams supported by the PDSCH is greater than 6, a maximum number of data streams supported by the PUSCH is greater than 4, and the DMRS port associated with the PTRS port is used for transmitting the PUSCH.

According to a fifth aspect, a terminal is provided, where the terminal includes a processor, a memory, and a program or an instruction stored in the memory and capable of running on the processor, and when the program or an instruction is executed by the processor, the steps of the method according to the first aspect are implemented.

According to a sixth aspect, a terminal is provided, including a processor and a communication interface, where the processor is configured to determine a transmission parameter for a phase tracking reference signal PTRS; and the communication interface is configured to send the PTRS based on the transmission parameter, or receive the PTRS based on the transmission parameter; where the PTRS includes at least one PTRS port, and the transmission parameter includes at least one of the following: a frequency domain resource offset for the PTRS port corresponding to a first demodulation reference signal DMRS port, an energy per resource element EPRE ratio of the PTRS port to a transmission channel, and a DMRS port associated with the PTRS port; and the first DMRS is a DMRS that multiplexes a port in a same code division multiplexing CDM group by using a first frequency domain orthogonal cover code FD-OCC sequence, a length of the first FD-OCC sequence is greater than 2, the transmission channel includes a physical downlink shared channel PDSCH or a physical uplink shared channel PUSCH, a maximum number of data streams supported by the PDSCH is greater than 6, a maximum number of data streams supported by the PUSCH is greater than 4, and the DMRS port associated with the PTRS port is used for transmitting the PUSCH.

According to a seventh aspect, a network-side device is provided, where the network-side device includes a processor and a memory, where a program or an instruction capable of running on the processor are stored in the memory. When the program or the instructions is executed by the processor, the steps of the method according to the third aspect are implemented.

According to an eighth aspect, a network-side device is provided, including a processor and a communication interface, where the processor is configured to determine a transmission parameter for a phase tracking reference signal PTRS; and the communication interface is configured to receive the PTRS based on the transmission parameter, or send the PTRS based on the transmission parameter; where the PTRS includes at least one PTRS port, and the transmission parameter includes at least one of the following: a frequency domain resource offset for the PTRS port corresponding to a first demodulation reference signal DMRS port, an energy per resource element EPRE ratio of the PTRS port to a transmission channel, and a DMRS port associated with the PTRS port; and the first DMRS is a DMRS that multiplexes a port in a same code division multiplexing CDM group by using a first frequency domain orthogonal cover code FD-OCC sequence, a length of the first FD-OCC sequence is greater than 2, the transmission channel includes a physical downlink shared channel PDSCH or a physical uplink shared channel PUSCH, a maximum number of data streams supported by the PDSCH is greater than 6, a maximum number of data streams supported by the PUSCH is greater than 4, and the DMRS port associated with the PTRS port is used for transmitting the PUSCH.

According to a ninth aspect, a phase tracking reference signal transmission system is provided, including a terminal and a network-side device, where the terminal can be configured to execute the steps of the phase tracking reference signal transmission method according to the first aspect, and the network-side device can be configured to execute the steps of the phase tracking reference signal transmission method according to the third aspect.

According to a tenth aspect, a readable storage medium is provided, where a program or an instruction are stored in the readable storage medium, and in a case that the program or the instructions are executed by a processor, the steps of the method according to the first aspect are implemented, or the steps of the method according to the third aspect are implemented.

According to an eleventh aspect, a chip is provided, where the chip includes a processor and a communication interface, the communication interface is coupled to the processor, and the processor is configured to run a program or an instruction to implement the steps of method according to the first aspect or the steps of the method according to the third aspect.

According to a twelfth aspect, a computer program/program product is provided, where the computer program/-program product is stored in a storage medium, and the computer program/program product is executed by at least one processor to implement the steps of the method according to the first aspect are implemented, or the steps of the method according to the third aspect.

In the embodiments of this application, the terminal determines the transmission parameter for the PTRS. The terminal sends the PTRS based on the transmission parameter, or the terminal receives the PTRS based on the transmission parameter; where the PTRS includes at least one PTRS port, and the transmission parameter includes at least one of the following: a frequency domain resource offset corresponding to the PTRS port on a first DMRS port, an EPRE ratio of the PTRS port to a transmission channel, and a DMRS port associated with the PTRS port; and the first DMRS is a DMRS that multiplexes a port in a same CDM group by using a first FD-OCC sequence, a length of the first FD-OCC sequence is greater than 2, the transmission channel includes a PDSCH or a PUSCH, a maximum number of data streams supported by the PDSCH is greater than 6, a maximum number of data streams supported by the PUSCH is greater than 4, and the DMRS port associated with the PTRS port is used for transmitting the PUSCH. That is, the embodiments of this application provide a PTRS transmission scheme for use in a case that the number of DMRS ports, the maximum number of data streams supported by a data channel, and the like are increased, so as to ensure accuracy of phase noise estimation.

**BRIEF DESCRIPTION OF DRAWINGS**

FIG. 1 is a block diagram of a wireless communication system to which embodiments of this application are applicable;
FIG. 2 is a flowchart of a phase tracking reference signal transmission method according to an embodiment of this application;
FIG. 3 is a flowchart of another phase tracking reference signal transmission method according to an embodiment of this application;
FIG. 4 is a structural diagram of a phase tracking reference signal transmission apparatus according to an embodiment of this application;
FIG. 5 is a structural diagram of another phase tracking reference signal transmission apparatus according to an embodiment of this application;
FIG. 6 is a structural diagram of a communication device according to an embodiment of this application;
FIG. 7 is a structural diagram of a terminal according to an embodiment of this application; and
FIG. 8 is a structural diagram of a network-side device according to an embodiment of this application.

## DETAILED DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. Based on the embodiments in this application, all other embodiments obtained by ordinary people in this field belong to the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other systems than an NR system application, for example, the 6th generation (6th Generation, 6G) communication system.

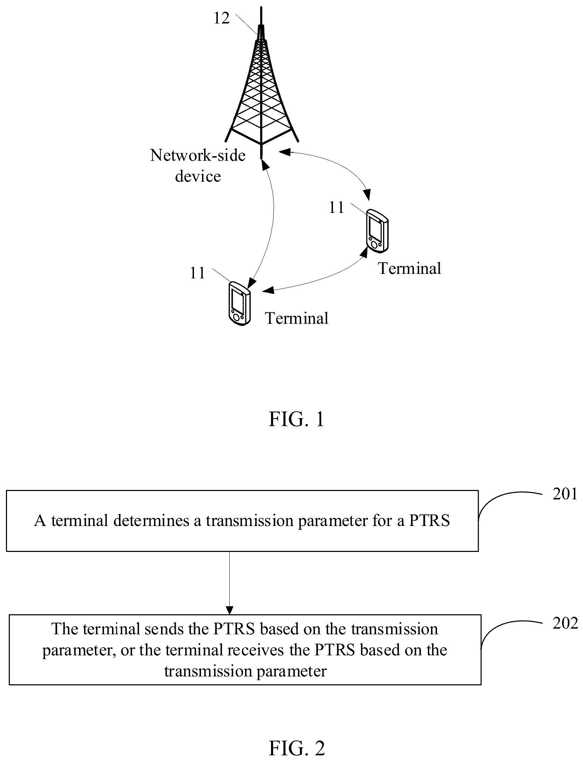

FIG. 1 is a block diagram of a wireless communication system to which the embodiments of this application are applicable. The wireless communication system includes a terminal 11 and a network-side device 12. The terminal 11 may be a terminal-side device such as a mobile phone, a tablet computer (Tablet Personal Computer), a laptop computer (Laptop Computer) or a notebook computer, a personal digital assistant (personal digital assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home device (a home device with wireless communication function, such as a refrigerator, a television, a washing machine, or a furniture), a game console, a personal computer (personal computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, and the like. It should be noted that a specific type of the terminal 11 is not limited in the embodiments of this application. The network-side device 12 may include an access network device or a core network device, where the access network device may also be referred to as a radio access network device, a radio access network (Radio Access Network, RAN), a radio access network function, or a radio access network unit. The access network device may include a base station, a wireless local area network (Wireless Local Area Networks, WLAN) access point, a wireless fidelity Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that, in the embodiments of this application, a core network device in an NR system is used as an example for description, and a specific type of the core network device is not limited.

For ease of understanding, the following describes some content included in the embodiments of this application:

I. DMRS

(1) DMRS introduction

In the NR system, DMRS is used for channel estimation. In Release 17 (Release 17th, Rel-17), DMRS for data channels is divided into the following types: DMRS configuration type 1 and DMRS configuration type 2. Both DMRS configuration types support single-symbol and double-symbol structures. For DMRS configuration type 1, the single-symbol structure supports a maximum of 4 ports, and the double-symbol structure supports a maximum of 8 ports. For DMRS configuration type 2, the single-symbol structure supports a maximum of 6 ports, and the double-symbol structure supports a maximum of 12 ports. In addition, DMRS configuration type 1 supports 2 CDM groups (group), and DMRS configuration type 2 supports 3 CDM groups (that is, CDM group).

The specific resource mapping method for DMRS reference signals is as follows:

$$a_{k,l}^{(p,\mu)} = \beta_{\mathrm{PDSCH}}^{\mathrm{DMRS}} w_f(k')w_t(l')r(2n + k')$$

$$k = \begin{cases} 4n + 2k' + \Delta, \text{configuration type 1} \\ 6n + k' + \Delta, \text{configuration type 2} \end{cases}$$

$$k' = 0,1;$$

$$l = \bar{l} + l';$$

$$n = 0,1, ...$$

where k indicates a frequency domain position identifier occupied by DMRS, $l$ indicates a time domain position identifier occupied by DMRS, p indicates an antenna port, $w_f(k')$ represents an FD-OCC sequence, where the length of the FD-OCC sequence is 2, $w_t(l')$ represents a TD-OCC sequence, where the length of TD-OCC sequence is 2, and r(*)represents a DMRS sequence.

Specifically, using PDSCH as an example, related configuration parameters of DMRS configuration type 1 (DMRS configuration type 1) may be shown in Table 1-1, and related configuration parameters of DMRS configuration type 2 (DMRS configuration type 2) may be shown in Table 1-2.

**Table 1-1 Parameters of DMRS configuration** type 1

| Port $p$ | CDM group $\lambda$ | $\Delta$ | $w_f(k')$ | | $w_t(l')$ | |
|---|---|---|---|---|---|---|
| | | | $k' = 0$ | $k' = 1$ | $l' = 0$ | $l' = 1$ |
| 1000 | 0 | 0 | +1 | +1 | +1 | +1 |
| 1001 | 0 | 0 | +1 | -1 | +1 | +1 |
| 1002 | 1 | 1 | +1 | +1 | +1 | +1 |
| 1003 | 1 | 1 | +1 | -1 | +1 | +1 |
| 1004 | 0 | 0 | +1 | +1 | +1 | -1 |

(continued)

| Port **p** | CDM group $\lambda$ | $\Delta$ | $w_f(k')$ | | $w_t(l')$ | |
|---|---|---|---|---|---|---|
| | | | $k' = 0$ | $k' = 1$ | $l' = 0$ | $l' = 1$ |
| 1005 | 0 | 0 | +1 | -1 | +1 | -1 |
| 1006 | 1 | 1 | +1 | +1 | +1 | -1 |
| 1007 | 1 | 1 | +1 | -1 | +1 | -1 |

Table 1-2 Parameters of DMRS configuration type 2

| Port p | CDM group $\lambda$ | $\Delta$ | $w_f(k')$ | | $w_t(l')$ | |
|---|---|---|---|---|---|---|
| | | | $k' = 0$ | $k' = 1$ | $l' = 0$ | $l' = 1$ |
| 1000 | 0 | 0 | +1 | +1 | +1 | +1 |
| 1001 | 0 | 0 | +1 | -1 | +1 | +1 |
| 1002 | 1 | 2 | +1 | +1 | +1 | +1 |
| 1003 | 1 | 2 | +1 | -1 | +1 | +1 |
| 1004 | 2 | 4 | +1 | +1 | +1 | +1 |
| 1005 | 2 | 4 | +1 | -1 | +1 | +1 |
| 1006 | 0 | 0 | +1 | +1 | +1 | -1 |
| 1007 | 0 | 0 | +1 | -1 | +1 | -1 |
| 1008 | 1 | 2 | +1 | +1 | +1 | -1 |
| 1009 | 1 | 2 | +1 | -1 | +1 | -1 |
| 1010 | 2 | 4 | +1 | +1 | +1 | -1 |
| 1011 | 2 | 4 | +1 | -1 | +1 | -1 |

2) DMRS Enhancement in Release 18 (Release 18th, Rel-18)

In Rel-18, the number of DMRS ports will double, using FD-OCC sequences with a length of 4 to double ports in each CMD group. That is, in Rel-18, for DMRS configuration type 1 (that is, type 1), also referred to as enhanced DMRS configuration type 1, the single-symbol structure supports a maximum of 8 ports, and the double-symbol structure supports a maximum of 16 ports. For DMRS configuration type 2 (that is, type 2), also referred to as enhanced DMRS configuration type 2, the single-symbol structure supports a maximum of 12 ports, and the double-symbol structure supports a maximum of 24 ports.

In addition, in Rel-18, the number of physical uplink sharing channel (Physical Uplink Sharing Channel, PUSCH) data streams per terminal will expand from a maximum of 4 data streams to a maximum of 8 data streams. That is, a corresponding DMRS for a PUSCH transmitted by each terminal may also require a maximum of 8 ports for multiplexing. However, whether Rel-17 DMRS ports are used for multiplexing or Rel-18 enhanced DMRS ports are used depends on the terminal capability.

II. PTRS

1) Background on PTRS introduction

In high-frequency communications such as millimeter waves, the hardware implementation of the analog front end is a significant challenge. For example, high-frequency oscillators may produce substantial phase noise, which disrupts orthogonality of orthogonal frequency division multiplexing (Orthogonal Frequency Division Multiplexing, OFDM) symbol subcarriers. Therefore, PTRS reference signals are introduced in the NR system to estimate phase noise, allowing the receiver to suppress and eliminate phase noise based on PTRS estimates.

2) PTRS ports

For downlink, in Release 15 (Release 15th, Rel-15), a maximum of 1 PTRS port is supported. in Release 16 (Release 16th, Rel-16), due to the introduction of the multi-transmission and reception point (Multi-Transmission and Reception Point, MTRP) transmission mode based on SDM, the number of PTRS ports expands to 2, limited to the MTRP transmission mode based on space division multiplexing (Space Division Multiplexing, SDM), with each transmission configuration indication (Transmission Configuration Indication, TCI) corresponding to one PTRS port.

For uplink, a maximum of 2 PTRS ports is supported, namely port 0 and port 1. For terminals with full-coherent (full-coherent) antennas, one PTRS port is used by default. For terminals with partial-coherent (partial-coherent) and non-coherent (non-coherent) antennas, one or two PTRS port can be configured by radio resource control (Radio Resource Control, RRC). When only 2 PTRS ports are configured, it does not mean both PTRS ports may be used, depending on the number of data streams of the PUSCH. For example, when the number of data streams of the PUSCH is 1, only PTRS port 0 may be used. When the number of data streams of the PUSCH is 2, then both PTRS port 0 and port 1 may be used.

3) PTRS resource mapping

PTRS resource mapping is related to DMRS. Its frequency-domain mapped subcarrier is associated with the corresponding DMRS port, and its time-domain mapped symbol is associated with the occupied symbols of the corresponding DMRS.

PTRS frequency-domain resource mapping can be expressed by the following formula:

$$k = k_{\text{ref}}^{\text{RE}} + (iK_{\text{PT-RS}} + k_{\text{ref}}^{\text{RB}})N_{\text{sc}}^{\text{RB}}$$

$$k_{\text{ref}}^{\text{RB}} = \begin{cases} n_{\text{RNTI}}\bmod K_{\text{PT-RS}}, & N_{\text{RB}}\bmod K_{\text{PT-RS}} = 0 \\ n_{\text{RNTI}}\bmod(N_{\text{RB}}\bmod K_{\text{PT-RS}}), & \text{others} \end{cases}$$

where "mod" indicates the modulo operation, k is a subcarrier index mapped by PTRS, i = 1, 2, 3..., $n_{\text{RNTI}}$ is a radio network temporary identity (Radio Network Temporary Identity, RNTI) associated with downlink control information (Downlink Control Information, DCI) for scheduling data transmission, $N_{\text{RB}}$ is the number of scheduled resource blocks (Resource Block, RB), $K_{\text{PT-RS}} \in \{2,4\}$ is a frequency domain mapping interval for the PTRS, that is, a frequency domain density factor, which is associated with the number of scheduled RBs, and $k_{\text{ref}}^{\text{RE}}$ is a resource element (Resource Element, RE) offset (RE offset) value associated with the DMRS port corresponding to PTRS. If the higher-layer parameter resourceElementOffset (resourceElementOffset) is not configured, the offset00 column is used, where $N_{\text{sc}}^{\text{RB}}$ is the number of subcarriers corresponding to one RB, and $k_{\text{ref}}^{\text{RB}}$ is a value of RB offset of PTRS.

PTRS time-domain resource mapping is related to occupied symbols of DMRS and a corresponding PUSCH/PDSCH modulation and coding scheme (Modulation and Coding Scheme, MCS) order.

When the MCS order of the data channel is relatively large, its modulation order and code rate are also relatively large, making it more susceptible to phase noise, requiring denser time-domain spacing. When the MCS order of the data channel is relatively small, its modulation order and code rate are also relatively small, making it less susceptible to phase noise, requiring less dense time-domain spacing. Therefore, in the design of PTRS, depending on different MCS orders, the time-domain symbol interval of PTRS can be flexibly set to {1, 2, 4}. In addition, it should be noted that if collisions occur with DMRS during time-domain mapping, PTRS will not be mapped on such symbols, and the calculation of time domain interval will be based on the DMRS symbol again.

4) PTRS-DMRS association (association) indication

For downlink, the terminal can report the strongest layer (that is, layer) to the network side through channel state information (Channel State Information, CSI) reporting via LI as a reference. When the transmitted data channel corresponds to one codeword (that is, codeword), the PTRS port is associated with a DMRS port with the smallest index on the codeword; when the transmitted data channel corresponds to two codewords, the PTRS port is associated with a DMRS port with the smallest index on a codeword with the largest MCS order. If MCS orders of two codewords are the same, a DMRS port with the smallest index on the 1st codeword is selected by default for association.

For uplink, because there is no CSI reporting, how to determine the strongest layer on the network side depends on the implementation on the network side. However, the network side needs to inform the terminal of an association relationship between the PTRS port and the DMRS through a PTRS-DMRS association field in DCI, so that the terminal can determine resources and corresponding DMRS port for PTRS transmission. For terminals with different antenna correlation capabilities, the PTRS-DMRS association indication method is slightly different.

For terminals with full-coherent antennas, since only one PTRS port needs to be configured and before Rel-18 the NR system's uplink supports a maximum of 4 data streams (corresponding to 4 DMRS ports), only 2 bits (bit) are needed to indicate the PTRS-DMRS association. For terminals with partial-coherent antennas and terminals with non-coherent antennas, if RRC configures one PTRS port, similarly only 2 bits are needed to indicate the association.

For terminals with partial-coherent antennas and terminals with non-coherent antennas, if RRC configures a maximum of two PTRS ports, the protocol specifies that PUSCH ports 1000 and 1002 are associated with PTRS port 0, and PUSCH ports 1001 and 1003 are associated with PTRS port 1, requiring to separately indicate DMRS ports corresponding to PTRS port 0 and port 1.

5) Transmit power of PTRS

For downlink, if the network side configures a higher-layer parameter of energy per resource element ratio (epre-Ratio) (set to 0 or 1), an EPRE ratio $\rho_{PTRS}$ of PTRS to PDSCH is shown in Table 2.

**Table 2**

| epre ratio | Number of PDSCH layers | | | | | |
|---|---|---|---|---|---|---|
| | 1 | 2 | 3 | 4 | 5 | 6 |
| 0 | 0 | 3 | 4.77 | 6 | 7 | 7.78 |
| 1 | 0 | 0 | 0 | 0 | 0 | 0 |
| 2 | Reserved | | | | | |
| 3 | Reserved | | | | | |

After $\rho_{PTRS}$ is determined, the transmit power of PTRS is scaled in proportion to $\beta_{PTRS} = 10^{\frac{\rho_{PTRS}}{20}}$. When the network side does not configure the higher-layer parameter epre-Ratio, epre-Ratio defaults to 0.

For uplink, if the network side configures a higher-layer parameter ptrs-Power (ptrs-Power) (set to 0 or 1), the EPRE ratio $\alpha_{PTRS}^{PUSCH}$ of PTRS to PUSCH is shown in Table 3.

**Table 3**

| $\alpha_{PTRS}^{PUSCH}$ | Number of PUSCH layers ( $n_{layer}^{PUSCH}$ ) | | | | | | | |
|---|---|---|---|---|---|---|---|---|
| | 1 | 2 | | 3 | | 4 | | |
| | All cases, | Fully coherent | Partially coherent, non-coherent, and non-codebook-based | Fully coherent | Partially coherent, non-coherent, and non-codebook-based | Fully coherent | Partial coherent | Non-coherent and non-codebook-based |
| 00 | 0 | 3 | 3Q$_p$-3 | 4.77 | 3Q$_p$-3 | 6 | 3Q$_p$ | 3Q$_p$-3 |
| 01 | 0 | 3 | 3 | 4.77 | 4.77 | 6 | 6 | 6 |
| 10 | Reserved | | | | | | | |
| 11 | Reserved | | | | | | | |

Where Qp={1,2} is the number of PTRS ports actually transmitted, and $n_{layer}^{PUSCH}$ is the number of scheduled PUSCH data streams. When $\alpha_{PTRS}^{PUSCH}$ is determined, the transmit power of PTRS is scaled in proportion to

$$\beta_{PTRS} = 10^{-\frac{\rho_{PTRS}^{PUSCH}}{20}}, \text{ where } \rho_{PTRS}^{PUSCH} = -\alpha_{PTRS}^{PUSCH}[dB]$$. When the higher-layer parameter ptrs-Power is not configured on the network side or the transmission mode is non-codebook (that is, non-codebook), the default ptrs-Power is '00'.

The following specifically describes the phase tracking reference signal transmission method provided in the embodiments of this application through specific embodiments and application scenarios thereof with reference to the accompanying drawings.

Referring to FIG. 2, FIG. 2 is a flowchart of a phase tracking reference signal transmission method according to an embodiment of this application. The method is applied to a terminal. As shown in FIG. 2, the method includes the following steps.

Step 201: The terminal determines a transmission parameter for a PTRS.

Step 202: The terminal sends the PTRS based on the transmission parameter, or the terminal receives the PTRS based on the transmission parameter.

The PTRS includes at least one PTRS port, and the transmission parameter includes at least one of the following: a frequency domain resource offset corresponding to the PTRS port on a first DMRS port, an EPRE ratio of the PTRS port to a transmission channel, and a DMRS port associated with the PTRS port; and

the first DMRS is a DMRS that multiplexes a port in a same CDM group by using a first FD-OCC sequence, a length of the first FD-OCC sequence is greater than 2, the transmission channel includes a PDSCH or a PUSCH, a maximum number of data streams supported by the PDSCH is greater than 6, a maximum number of data streams supported by the PUSCH is greater than 4, and the DMRS port associated with the PTRS port is used for transmitting the PUSCH.

In this embodiment, the PTRS may include one or at least two PTRS ports. It should be understood that, in a case that the PTRS includes one PTRS port, the transmission parameter includes at least one of the following: a frequency domain resource offset corresponding to the PTRS port on a first DMRS port, an EPRE ratio of the PTRS port to a transmission channel, and a DMRS port associated with the PTRS port; in a case that the PTRS includes two PTRS ports, the transmission parameter may include at least one of a frequency domain resource offset corresponding to each PTRS port of the at least two PTRS ports on the first DMRS port, an EPRE ratio of each PTRS port to a transmission channel, and a DMRS port associated with each PTRS port.

The first DMRS port can be understood as a port of the first DMRS, the first DMRS is a DMRS that multiplexes a port in a same CDM group by using a first FD-OCC sequence, a length of the first FD-OCC sequence is greater than 2, for example, the length of the first FD-OCC sequence is equal to 4. Using the length of the first FD-OCC sequence being 4 as an example, for DMRS configuration type 1 (that is, type 1), the single symbol structure supports a maximum of 8 ports, and the double-symbol structure supports a maximum of 16 ports; for DMRS configuration type 2 (that is, type 2), the single-symbol structure supports a maximum of 12 ports, and the double-symbol structure supports a maximum of 24 ports. The DMRS configuration type 1 includes enhanced DMRS configuration type 1, and the DMRS configuration type 2 includes enhanced DMRS configuration type 2. That is, the maximum number of supported DMRS ports in this embodiment of this application is greater than the maximum number of supported DMRS ports in the related art. The frequency domain resource offset may include, but is not limited to, one or more of RE offset, RB offset, and the like.

The EPRE ratio of the PTRS port to the transmission channel may include an EPRE ratio of the PTRS port to the transmission channel on each stream. For uplink PTRS transmission, the data channel may include PUSCH, where the maximum number of data streams supported by the PUSCH is greater than 4, for example, the maximum number of data streams supported by the PUSCH may be 6 or 8; or the like. That is, the maximum number of data streams supported by the PUSCH in this embodiment of this application is more than the maximum number of data streams supported by PUSCH in the related art. For downlink PTRS transmission, the data channel may include PDSCH, where the maximum number of data streams supported by the PDSCH is greater than 6, for example, the maximum number of data streams supported by the PDSCH may be 8, that is, the maximum number of data streams supported by the PDSCH in the embodiment of this application is more than the maximum number of data streams supported by PDSCH in the related art.

The DMRS port associated with the PTRS port may be a port of the first DMRS (that is, the first DMRS port) or a port of the second DMRS (that is, a second DMRS port), where the second DMRS is a DMRS that multiplexes a port in a same CDM group by using a second FD-OCC sequence, and a length of the second FD-OCC sequence is equal to 2. However, whether the DMRS port associated with the PTRS port is the first DMRS port or a second DMRS port, it is used to transmit a PUSCH supporting the maximum number of supported data streams greater than 4. For example, if the DMRS port associated with the PTRS port is the first DMRS port, it is used to transmit a PUSCH supporting the maximum number of supported data streams of 8, and if the DMRS port associated with the PTRS port is the second DMRS port, it is used to transmit a PUSCH supporting the maximum number of supported data streams of 6.

For uplink PTRS transmission, the terminal can determine the transmission parameter for the PTRS, and send the PTRS to the network-side device based on the transmission parameter. For downlink PTRS transmission, the terminal can determine the transmission parameter for the PTRS and receive the PTRS from the network-side device based on the transmission parameter.

In the phase tracking reference signal transmission method provided in this embodiment of the application, the terminal determines the transmission parameter for the PTRS. The terminal sends the PTRS based on the transmission parameter, or the terminal receives the PTRS based on the transmission parameter; where the PTRS includes at least one PTRS port, and the transmission parameter includes at least one of the following: a frequency domain resource offset for the PTRS port corresponding to a first DMRS port, an EPRE ratio of the PTRS port to a transmission channel, and a DMRS port associated with the PTRS port; and the first DMRS is a DMRS that multiplexes a port in a same CDM group by using a first FD-OCC sequence, a length of the first FD-OCC sequence is greater than 2, the transmission channel includes a PDSCH or a PUSCH, a maximum number of data streams supported by the PDSCH is greater than 6, a maximum number of data streams supported by the PUSCH is greater than 4, and the DMRS port associated with the PTRS port is used for transmitting the PUSCH. That is, the embodiments of this application provide a PTRS transmission scheme for use in a case that the number of DMRS ports, the maximum number of data streams supported by a data channel, and the like are increased, so as to ensure accuracy of phase noise estimation.

Optionally, the frequency domain resource offset includes at least one of the following: an RE offset; and an RB offset.

Optionally, RE offsets for the PTRS port corresponding to at least two first DMRS ports are different, and the at least two first DMRS ports belong to a same CDM group.

In this embodiment, RE offsets (that is, RE offset) corresponding to the PTRS port on at least two first DMRS ports in a same CDM group are different, which can effectively avoid resource conflicts.

For example, RE offsets for the PTRS port corresponding to four first DMRS ports are different. For example, when the DMRS is DMRS configuration type 1, RE offsets for the PTRS port corresponding to first DMRS ports 0, 1, 8, and 9 are different.

Optionally, the RE offsets for the PTRS port corresponding to the at least two first DMRS ports sequentially and incrementally correspond, based on an incrementing order of indexes of the at least two first DMRS ports, to subcarriers occupied by the at least two first DMRS ports.

The following describes this implementation by using examples in different cases.

(1) When the DMRS is configuration type 1, default resource element offsets (that is, RE offset) corresponding to first DMRS ports 0, 1, 8, and 9 in CDM group 0 are 0, 2, 4, and 6 respectively; default RE offsets corresponding to first DMRS ports 2, 3, 10, and 11 in CDM group 1 are 1, 3, 5, and 7 respectively, that is, based on an incrementing order of indexes of the DMRS ports, sequentially and incrementally corresponding to subcarriers occupied by the DMRS ports, as shown in Table 4.

**Table 4**

| DM-RS port $p$ | Resource element offset $k_{\text{ref}}^{\text{RE}}$ | | | |
| | DMRS configuration type 1 | | | |
| | Resource element offset | | | |
| | offset00 | offset01 | offset10 | offset 11 |
| 0 | 0 | 2 | 6 | 8 |
| 1 | 2 | 4 | 8 | 10 |
| 2 | 1 | 3 | 7 | 9 |
| 3 | 3 | 5 | 9 | 11 |
| 8 | 4 | 6 | 10 | 0 |
| 9 | 6 | 8 | 0 | 2 |
| 10 | 5 | 7 | 11 | 1 |
| 11 | 7 | 9 | 1 | 3 |

(2) When the DMRS is configuration type 1, default RE offsets corresponding to first DMRS ports 0, 1, 8, and 9 in CDM group 0 are 0, 2, 8, and 10 respectively; default RE offsets corresponding to first DMRS ports 2, 3, 10, and 11 in CDM group 1 are 1, 3, 9, and 11 respectively, that is, based on an incrementing order of indexes of the DMRS ports, sequentially and incrementally corresponding to subcarriers occupied by the DMRS ports, as shown in Table 5.

**Table 5**

| DMRS port $p$ | Resource element offset $k_{\mathrm{ref}}^{\mathrm{RE}}$ | | | |
| | DMRS configuration type 1 | | | |
| | Resource element offset | | | |
| | offset00 | offset01 | offset 10 | offset11 |
| 0 | 0 | 2 | 6 | 8 |
| 1 | 2 | 4 | 8 | 10 |
| 2 | 1 | 3 | 7 | 9 |
| 3 | 3 | 5 | 9 | 11 |
| 8 | 8 | 10 | 2 | 4 |
| 9 | 10 | 0 | 4 | 6 |
| 10 | 9 | 11 | 3 | 5 |
| 11 | 11 | 1 | 5 | 7 |

(3) When the DMRS is configuration type 1, default RE offsets corresponding to first DMRS ports 0, 1, 8, and 9 in CDM group 0 are 0, 2, 6, and 8 respectively; default RE offsets corresponding to first DMRS ports 2, 3, 10, and 11 in CDM group 1 are 1, 3, 7, and 9 respectively, that is, based on an incrementing order of indexes of the DMRS ports, sequentially and incrementally corresponding to subcarriers occupied by the DMRS ports, as shown in Table 6.

**Table 6**

| DMRS port $p$ | Resource element offset $k_{\mathrm{ref}}^{\mathrm{RE}}$ | | | |
| | DMRS configuration type 1 | | | |
| | Resource element offset | | | |
| | offset00 | offset01 | offset10 | offset11 |
| 0 | 0 | 2 | 6 | 8 |
| 1 | 2 | 4 | 8 | 10 |
| 2 | 1 | 3 | 7 | 9 |
| 3 | 3 | 5 | 9 | 11 |
| 8 | 6 | 8 | 0 | 2 |
| 9 | 8 | 10 | 2 | 4 |
| 10 | 7 | 9 | 1 | 3 |
| 11 | 9 | 11 | 3 | 5 |

(4) When the DMRS is configuration type 2, default RE offsets corresponding to first DMRS ports 0, 1, 12, and 13 in CDM group 0 are 0, 1, 6, and 7 respectively; default RE offsets corresponding to first DMRS ports 2, 3, 14, and 15 in CDM group 1 are 2, 3, 8, and 9 respectively; default RE offsets corresponding to first DMRS ports 4, 5, 16, and 17 in CDM group 2 are 4, 5, 10, and 11 respectively, that is, based on an incrementing order of indexes of the DMRS ports, sequentially and incrementally corresponding to subcarriers occupied by the DMRS ports, as shown in Table 7.

**Table 7**

| DMRS port $p$ | Resource element offset $k_{ref}^{RE}$ | | | |
| --- | --- | --- | --- | --- |
| | DMRS configuration type 2 | | | |
| | Resource element offset | | | |
| | offset00 | offset01 | offset10 | offset11 |
| 0 | 0 | 1 | 6 | 7 |
| 1 | 1 | 6 | 7 | 0 |
| 2 | 2 | 3 | 8 | 9 |
| 3 | 3 | 8 | 9 | 2 |
| 4 | 4 | 5 | 10 | 11 |
| 5 | 5 | 10 | 11 | 4 |
| 12 | 6 | 7 | 0 | 1 |
| 13 | 7 | 0 | 1 | 6 |
| 14 | 8 | 9 | 2 | 3 |
| 15 | 9 | 2 | 3 | 8 |
| 16 | 10 | 11 | 4 | 5 |
| 17 | 11 | 4 | 5 | 10 |

In some optional embodiments, the network-side device can also adjust the RE offset through RRC signaling. One optional adjustment rule is to additionally add an offset with an interval of T to the default RE offset. However, since the final RE offset is limited to within the range of one RB, when the value of default RE offset+T exceeds 12, it is necessary to perform a modulo 12 calculation. For example, when the value of default RE offset+T is 13, the final RE offset is 1.

For example, as shown in Table 4, Table 5, and Table 6, for DMRS configuration type 1, when there is no related RRC signaling or RRC signaling corresponds to "offset00", the default RE offset is used, that is, T = 0. When RRC signaling corresponds to "offset01", an offset of T=2 is additionally added to the default RE offset. When RRC signaling corresponds to "offset10", an offset of T=6 is additionally added to the default RE offset. When RRC signaling corresponds to "offset11", an offset of T=8 is additionally added to the default RE offset. A specific value of the RE offset corresponding to each DMRS port may be shown in Table 4, Table 5, and Table 6.

For example, as shown in Table 4, for DMRS configuration type 2, when there is no related RRC signaling or RRC signaling corresponds to "offset00", the default RE offset is used, that is, T = 0. When RRC signaling corresponds to "offset01", an offset of T=1 is additionally added to the default RE offset. When RRC signaling corresponds to "offset 10", an offset of T=6 is additionally added to the default RE offset. When RRC signaling corresponds to "offset11", an offset of T=7 is additionally added to the default RE offset. A specific value of the RE offset corresponding to each DMRS port may be shown in Table 7.

In some optional embodiments, for DMRS configuration type 1, first DMRS ports 0, 1, 2, and 3 can be regarded as a first port group, and first DMRS ports 8, 9, 10, and 11 can be regarded as a second port group. RE offsets of the PTRS port on first DMRS ports 0, 1, 2, 3, 8, 9, 10, and 11 may be different, but RB offsets (that is, RB offset) corresponding to first DMRS ports of the first port group and the second port group may be the same.

It should be noted that the indexes of the first DMRS port in the table are only used to simplify the description. For PDSCH DMRS, the DMRS port indexes 0 to 17 in the above table respectively correspond to 1000 to 1017; for PUSCH DMRS, the DMRS port indexes 0 to 17 in the above table respectively correspond to 0 to 17.

Optionally, RE offsets for the PTRS port corresponding to part of first DMRS ports are the same, and the part of first DMRS ports belong to a same CDM group.

In this embodiment, RE offsets for the PTRS port corresponding to part of first DMRS ports in a same CDM group are the same, so that the PTRS port can be allocated more frequency domain resource offsets corresponding to the first DMRS ports in a case that the RE offset is limited by the range of one RB.

Optionally, a difference between port indexes of the part of first DMRS ports is N, and N is a positive integer.

A value of N may be predefined by the protocol.

The following describes this implementation by using examples in different cases.

(1) When DMRS is configuration type 1, in CDM group 0, default RE offsets corresponding to first DMRS ports 0, 1, 8, and 9 are 0, 2, 0, and 2 respectively; in CDM group 1, default RE offsets corresponding to first DMRS ports 2, 3, 10, and 11 are 1, 3, 1, and 3 respectively. That is, default RE offsets one-to-one corresponding to the first DMRS ports 0, 1, 2, and 3 are the same as those corresponding to the first DMRS ports 8, 9, 10, and 11. In this case, a port index difference between the first DMRS ports corresponding to same RE offsets is 8, as shown in Table 8.

**Table 8**

| DMRS port p | Resource element offset $k_{ref}^{RE}$ | | | |
| --- | --- | --- | --- | --- |
| | DMRS configuration type 1 | | | |
| | Resource element offset | | | |
| | offset00 | offset01 | offset 10 | offset11 |
| 0 | 0 | 2 | 6 | 8 |
| 1 | 2 | 4 | 8 | 10 |
| 2 | 1 | 3 | 7 | 9 |
| 3 | 3 | 5 | 9 | 11 |
| 8 | 0 | 2 | 6 | 8 |
| 9 | 2 | 4 | 8 | 10 |
| 10 | 1 | 3 | 7 | 9 |
| 11 | 3 | 5 | 9 | 11 |

(2) When the DMRS is configuration type 2, default RE offsets corresponding to first DMRS ports 0, 1, 12, and 13 in CDM group 0 are 0, 1, 0, and 1 respectively; default RE offsets corresponding to first DMRS ports 2, 3, 14, and 15 in CDM group 1 are 2, 3, 2, and 3 respectively; default RE offsets corresponding to first DMRS ports 4, 5, 16, and 17 in CDM group 2 are 4, 5, 4, and 5 respectively. That is, default RE offsets one-to-one corresponding to the first DMRS ports 0, 1, 2, 3, 4, and 5 are the same as those corresponding to the first DMRS ports 12, 13, 14, 15, 16, and 17. In this case, a port index difference between the first DMRS ports corresponding to the same RE offset is 12, as shown in Table 9.

Table 9

| DMRS port p | Resource element offset $k_{ref}^{RE}$ | | | |
| --- | --- | --- | --- | --- |
| | DMRS configuration type 2 | | | |
| | Resource element offset | | | |
| | offset00 | offset01 | offset 10 | offset11 |
| 0 | 0 | 1 | 6 | 7 |
| 1 | 1 | 6 | 7 | 0 |
| 2 | 2 | 3 | 8 | 9 |
| 3 | 3 | 8 | 9 | 2 |
| 4 | 4 | 5 | 10 | 11 |
| 5 | 5 | 10 | 11 | 4 |
| 12 | 0 | 1 | 6 | 7 |
| 13 | 1 | 6 | 7 | 0 |
| 14 | 2 | 3 | 8 | 9 |
| 15 | 3 | 8 | 9 | 2 |
| 16 | 4 | 5 | 10 | 11 |
| 17 | 5 | 10 | 11 | 4 |

In some optional embodiments, the network-side device can also adjust the RE offset through RRC signaling. One optional adjustment rule is to additionally add an offset with an interval of T to the default RE offset. However, since the final RE offset is limited to within the range of one RB, when the value of default RE offset+T exceeds 12, it is necessary to perform a modulo 12 calculation. For example, when the value of default RE offset+T is 13, the final RE offset is 1.

For example, as shown in Table 8, for DMRS configuration type 1, when there is no related RRC signaling or RRC signaling corresponds to "offset00", the default RE offset is used, that is, T = 0. When RRC signaling corresponds to "offset01", an offset of T=2 is additionally added to the default RE offset. When RRC signaling corresponds to "offset10", an offset of T=6 is additionally added to the default RE offset. When RRC signaling corresponds to "offset11", an offset of T=8 is additionally added to the default RE offset. A specific value of the RE offset corresponding to each DMRS port may be shown in Table 8.

For example, as shown in Table 9, for DMRS configuration type 2, when there is no related RRC signaling or RRC signaling corresponds to "offset00", the default RE offset is used, that is, T = 0. When RRC signaling corresponds to "offset01", an offset of T=1 is additionally added to the default RE offset. When RRC signaling corresponds to "offset 10", an offset of T=6 is additionally added to the default RE offset. When RRC signaling corresponds to "offset11", an offset of T=7 is additionally added to the default RE offset. A specific value of the RE offset corresponding to each DMRS port may be shown in Table 9.

It should be noted that the indexes of the first DMRS port in the table are only used to simplify the description. For PDSCH DMRS, the DMRS port indexes 0 to 17 in the above table respectively correspond to 1000 to 1017; for PUSCH DMRS, the DMRS port indexes 0 to 17 in the above table respectively correspond to 0 to 17.

In some optional embodiments, in a case that the RE offsets corresponding to part of first DMRS ports are the same, to avoid resource collision, it can be solved by making RB offsets (RB offset) corresponding to the part of first DMRS ports different.

Optionally, an RB offset for the PTRS port corresponding to a first port group is different from an RB offset for the PTRS port corresponding to a second port group;

or,

> an RB offset for the PTRS port corresponding to a first port group is the same as an RB offset for the PTRS port corresponding to a second port group; where
> the first port group and the second port group each include at least one first DMRS port.

In some optional embodiments, the first DMRS port indexes in the second port group may be greater than the first DMRS port indexes in the first port group. For example, for DMRS configuration type 1, first DMRS ports 0, 1, 2, 3 can be divided into a first port group and first DMRS ports 8, 9, 10, 11 can be divided into a second port group. For DMRS configuration type 2, first DMRS ports 0, 1, 2, 3, 4, and 5 can be divided into a first port group, and first DMRS ports 12, 13, 14, 15, 16, and 17 can be divided into a second port group.

It should be noted that first DMRS ports in different port groups may come from one or more same CDM groups, and first DMRS ports in a same port group may come from different CDM groups. For example, if CDM group 0 includes first DMRS ports 0, 1, 8, and 9, and CDM group 1 includes first DMRS ports 2, 3, 10, and 11, then for the above example, the first DMRS ports of the first port group and the first DMRS ports in the second port group are both from CDM group 0 and CDM group 1.

In an implementation, an RB offset for the PTRS port corresponding to the first port group may be different from an RB offset for the PTRS port corresponding to the second port group. In this way, resource collision can be avoided based on the RB offset. It can be understood that in this implementation, RB offsets for the PTRS port corresponding to the first DMRS ports of the first port group are all the same.

In some optional embodiments, in a case that corresponding RE offsets on part of first DMRS ports are the same, the first DMRS ports with the same RE offset can be divided into a same port group, and first DMRS ports with different RE offsets can be divided into different port groups. In this way, resource collision can be avoided based on the RB offset.

In another implementation, an RB offset for the PTRS port corresponding to the first port group is the same as an RB offset for the PTRS port corresponding to the second port group. In this case, the RE offset for the PTRS port corresponding to the first port group and the RE offset for the PTRS port corresponding to the second port group can be configured to be different, so as to reduce resource collision.

Optionally, in a case that an RB offset for the PTRS port corresponding to the first port group is different from an RB offset for the PTRS port corresponding to the second port group, the RB offset for the PTRS port corresponding to the first port group and the RB offset for the PTRS port corresponding to the second port group are determined based on first RB offset signaling; or

> a difference between the RB offset for the PTRS port corresponding to the first port group and the RB offset for the PTRS port corresponding to the second port group is determined based on a frequency domain density factor of the PTRS port; or

a difference between the RB offset for the PTRS port corresponding to the first port group and the RB offset for the PTRS port corresponding to the second port group is K, and K is a positive integer.

In an implementation, the RB offset for the PTRS port corresponding to the first port group and the RB offset for the PTRS port corresponding to the second port group can be determined based on first RB offset signaling, so as to improve flexibility of RB offset configuration. The first RB offset signaling may be RRC signaling or DCI signaling.

Optionally, the first RB offset signaling is used to separately indicate the RB offset for the PTRS port corresponding to the first port group and the RB offset for the PTRS port corresponding to the second port group;

or,

the first RB offset signaling is used to indicate the difference between the RB offset for the PTRS port corresponding to the first port group and the RB offset for the PTRS port corresponding to the second port group.

For example, for the first port group or the second port group, frequency domain resource mapping for the PTRS port can be expressed by the following formula:

$$k = k_{\mathrm{ref}}^{\mathrm{RE}} + (iK_{\mathrm{PT-RS}} + k_{\mathrm{ref}}^{\mathrm{RB}} + k_{\mathrm{offset}}^{\mathrm{RB}})N_{\mathrm{sc}}^{\mathrm{RB}}$$

$$k_{\mathrm{ref}}^{\mathrm{RB}} = \begin{cases} n_{\mathrm{RNTI}}\mathrm{mod}K_{\mathrm{PT-RS}}, & N_{\mathrm{RB}}\mathrm{mod}K_{\mathrm{PT-RS}} = 0 \\ n_{\mathrm{RNTI}}\mathrm{mod}(N_{\mathrm{RB}}\mathrm{mod}K_{\mathrm{PT-RS}}), & \text{others} \end{cases}$$

where "mod" represents modulo operation, and k is a subcarrier index mapped by the PTRS port; i = 1, 2, 3...; $n_{\mathrm{RNTI}}$ is an RNTI associated with DCI; $N_{\mathrm{RB}}$ is the number of RBs scheduled; $K_{\mathrm{PT-RS}}$ is a frequency domain density factor of the PTRS port; $N_{\mathrm{sc}}^{\mathrm{RB}}$ is the number of subcarriers corresponding to one RB, and $k_{\mathrm{ref}}^{\mathrm{RB}}$ is a value of an RB offset of PTRS. $k_{\mathrm{offset}}^{\mathrm{RB}}$ is an RB offset corresponding to the first port group or the second port group (optionally, the protocol specifies that RB offsets corresponding to the first port group and the second port group are different);or $k_{\mathrm{offset}}^{\mathrm{RB}}$ is a difference of RB offsets corresponding to the first port group and the second port group, $0 \le k_{\mathrm{offset}}^{\mathrm{RB}} \le K_{PT-RS}\text{-}1$ or $0 < k_{\mathrm{offset}}^{\mathrm{RB}} \le K_{PT-RS}\text{-}1$, in this case, it can be understood that $k_{\mathrm{offset}}^{\mathrm{RB}}$ of the first port group is 0 by default, and it is not necessary to configure it by using first RB offset signaling. That is, for the first port group, frequency domain resource mapping for the PTRS can still be expressed by using the following formula.

$$k = k_{\mathrm{ref}}^{\mathrm{RE}} + (iK_{\mathrm{PT-RS}} + k_{\mathrm{ref}}^{\mathrm{RB}})N_{\mathrm{sc}}^{\mathrm{RB}}$$

$$k_{\mathrm{ref}}^{\mathrm{RB}} = \begin{cases} n_{\mathrm{RNTI}}\mathrm{mod}K_{\mathrm{PT-RS}}, & N_{\mathrm{RB}}\mathrm{mod}K_{\mathrm{PT-RS}} = 0 \\ n_{\mathrm{RNTI}}\mathrm{mod}(N_{\mathrm{RB}}\mathrm{mod}K_{\mathrm{PT-RS}}), & \text{others} \end{cases}$$

where "mod" represents modulo operation, and k is a subcarrier index mapped by the PTRS port; i = 1, 2, 3...; $n_{\mathrm{RNTI}}$ is an RNTI associated with DCI; $N_{\mathrm{RB}}$ is the number of RBs scheduled; $K_{\mathrm{PT-RS}}$ is a frequency domain density factor of the PTRS port; $k_{\mathrm{offset}}^{\mathrm{RB}}$ is an RB offset; $N_{\mathrm{sc}}^{\mathrm{RB}}$ is the number of subcarriers corresponding to one RB, and $k_{\mathrm{ref}}^{\mathrm{RB}}$ is a value of an RB offset of PTRS.

In another implementation, a difference between the RB offset for the PTRS port corresponding to the first port group and the RB offset for the PTRS port corresponding to the second port group can be determined based on a frequency domain density factor of the PTRS port. For example, a difference between the RB offset for the PTRS port corresponding to the first port group and the RB offset for the PTRS port corresponding to the second port group may be half of the frequency domain density factor $K_{\mathrm{PT-RS}}$ of the PTRS port. For example, if the RB offset corresponding to the first port group is 1, the RB offset corresponding to the second port group is 3.

In still another implementation, a value of the difference between the RB offset for the PTRS port corresponding to the first port group and the RB offset for the PTRS port corresponding to the second port group may be specified by the protocol to be K, and a value of K can be specified by the protocol, for example, the protocol specifies that the value of K is 1. In this case, the RB offset of the first port group is determined based on an RNTI (that is, $n_{\mathrm{RNTI}}$) associated with DCI that schedules data transmission.

For example, for the first port group, frequency domain resource mapping for the PTRS port can be expressed by the following formula:

$$k = k_{\text{ref}}^{\text{RE}} + (iK_{\text{PT-RS}} + k_{\text{ref}}^{\text{RB}})N_{\text{sc}}^{\text{RB}}$$

$$k_{\text{ref}}^{\text{RB}} = \begin{cases} n_{\text{RNTI}}\text{mod}K_{\text{PT-RS}}, & N_{\text{RB}}\text{mod}K_{\text{PT-RS}} = 0 \\ n_{\text{RNTI}}\text{mod}(N_{\text{RB}}\text{mod}K_{\text{PT-RS}}), & \text{others} \end{cases}$$

where "mod" represents modulo operation, and k is a subcarrier index mapped by the PTRS port; i = 1, 2, 3...; $n_{\text{RNTI}}$ is an RNTI associated with DCI; $N_{\text{RB}}$ is the number of RBs scheduled; $K_{\text{PT-RS}}$ is a frequency domain density factor of the PTRS port; $k_{\text{ref}}^{\text{RE}}$ is an RE offset; $N_{\text{sc}}^{\text{RB}}$ is the number of subcarriers corresponding to one RB, and $k_{\text{ref}}^{\text{RB}}$ is a value of an RB offset of PTRS.

For example, for the second port group, frequency domain resource mapping for the PTRS port can be expressed by the following formula:

$$k = k_{\text{ref}}^{\text{RE}} + (iK_{\text{PT-RS}} + k_{\text{ref}}^{\text{RB}} + \text{A})N_{\text{sc}}^{\text{RB}}$$

$$k_{\text{ref}}^{\text{RB}} = \begin{cases} n_{\text{RNTI}}\text{mod}K_{\text{PT-RS}}, & N_{\text{RB}}\text{mod}K_{\text{PT-RS}} = 0 \\ n_{\text{RNTI}}\text{mod}(N_{\text{RB}}\text{mod}K_{\text{PT-RS}}), & \text{others} \end{cases}$$

where "mod" represents modulo operation, and k is a subcarrier index mapped by the PTRS port; i = 1, 2, 3...; $n_{\text{RNTI}}$ is an RNTI associated with DCI; A is a difference between the corresponding RB offset on the first port group and the corresponding RB offset of the PTRS port on the second port group, $N_{\text{RB}}$ is the number of RBs scheduled; $K_{\text{PT-RS}}$ is a frequency domain density factor of the PTRS port; $k_{\text{ref}}^{\text{RE}}$ is an RE offset; $N_{\text{sc}}^{\text{RB}}$ is the number of subcarriers corresponding to one RB, and $k_{\text{ref}}^{\text{RB}}$ is a value of an RB offset of PTRS.

For example, for DMRS configuration type 1, first DMRS ports of the first port group includes first DMRS ports 0, 1, 2, and 3, and first DMRS port of the second port group include first DMRS ports 8, 9, 10, and 11. For DMRS configuration type 2, first DMRS ports of the first port group include first DMRS ports 0, 1, 2, 3, 4, and 5, and first DMRS ports of the second port group include first DMRS ports 12, 13, 14, 15, 16, and 17.

Optionally, the EPRE ratio of the PTRS port to the transmission channel includes one of the following:

a first EPRE ratio of the PTRS port to the PDSCH on each RE of each data stream; and
a second EPRE ratio of the PUSCH to the PTRS port on each RE of each data stream.

It can be understood that for uplink PTRS transmission, the EPRE ratio of the PTRS port to the transmission channel may include a second EPRE ratio of the PUSCH to the PTRS port on each RE of each data stream; for downlink PTRS transmission, the EPRE ratio of the PTRS port to the transmission channel may include a first EPRE ratio of the PTRS port to the PDSCH on each RE of each data stream.

Optionally, in a case that a DMRS used for transmitting the PDSCH is the first DMRS, the first EPRE ratio is determined based on the number of data streams of the PDSCH, or the first EPRE ratio is 0 dB.

For example, the first EPRE ratio may be determined based on the following formula:

$$\rho_{PTRS} = 10 * log_{10}(\text{L1})dB$$

where $\rho_{PTRS}$ represents the first EPRE ratio, L1 represents the number of data streams of PDSCH, and 1≤L1≤8.

It can be understood that the first EPRE ratio is 0 dB, that is, the transmit power of the PTRS port is not scaled.

In some optional embodiments, the first EPRE ratio can be indicated by an RRC parameter epre-Ratio, and the first EPRE ratio corresponding to different PDSCH data streams L1 can be shown in Table 10.

**Table 10**

| epre-Ratio | The number of PDSCH layers with DM-RS associated to the PT-RS port | | | | | | | |
|---|---|---|---|---|---|---|---|---|
| | 1 | 2 | 3 | 4 | 5 | 6 | 7 | 8 |
| 0 | 0 | 3 | 4.77 | 6 | 7 | 7.78 | 8.45 | 9 |
| 1 | 0 | 0 | 0 | 0 | 0 | 0 | 0 | 0 |
| 2 | Reserved | | | | | | | |
| 3 | Reserved | | | | | | | |

Optionally, in a case that a DMRS used for transmitting the PUSCH is the first DMRS or a second DMRS, the second EPRE ratio is determined based on at least one of the following parameters:

the number of data streams of the PUSCH;
antenna correlation capability information of the terminal; and
the number of PTRS ports; where
in a case that the DMRS used for transmitting the PUSCH is the first DMRS, the maximum number of data streams supported by the PUSCH is 8; and in a case that the DMRS used for transmitting the PUSCH is the second DMRS, the maximum number of data streams supported by the PUSCH is 6, where the second DMRS is a DMRS that multiplexes a port in a same CDM group by using a second FD-OCC sequence, and a length of the second FD-OCC sequence is equal to 2.

For example, the number of PTRS ports may be 1, 2, 3, or 4.
In an implementation, in a case that the DMRS used for transmitting the PUSCH is the first DMRS, the maximum number of data streams of the PUSCH is 8, that is, a value range of the number of data streams of the PUSCH is [1,8].
The following describes this implementation by using examples:
When the DMRS used for PUSCH transmission is the first DMRS, a maximum of 8 first DMRS ports can be supported on a single OFDM symbol, and the maximum number of PUSCH data streams is 8. In this case, if the terminal supports transmission of 1 to 8 PUSCH data streams, the second EPRE ratio (that is, $\alpha_{PTRS}^{PUSCH}$) is related to the number of data streams of the PUSCH (that is, L2, where $1 \leq L2 \leq 8$), antenna correlation capability information of the UE, and the number of PTRS ports associated with PUSCH (that is, $Q_p$, where $Q_p$ is 1, 2, 3 or 4), where the antenna correlation of the UE and the maximum number of supported PTRS ports are related to the UE capability, and the UE can perform capability reporting for reference for the network-side device to configure PTRS.

1) When the number of data streams of the PUSCH is 1:

$Q_p$=1, and $\alpha_{PTRS}^{PUSCH}$ is 0 for terminals with full-coherent antennas.
2) When the number of data streams of the PUSCH is 2:

$Q_p$=1:

for terminals with full-coherent antennas, $\alpha_{PTRS}^{PUSCH}$ is 3;

for terminals with partial-coherent antennas, $\alpha_{PTRS}^{PUSCH}$ is 0;

for terminals with non-coherent antennas, $\alpha_{PTRS}^{PUSCH}$ is 0;

$Q_p$=2:

for terminals with partial-coherent antennas, $\alpha_{PTRS}^{PUSCH}$ is 3;

for terminals with non-coherent antennas, $\alpha_{PTRS}^{PUSCH}$ is 3.

3) When the number of data streams of the PUSCH is 3:

$Q_p$=1:

for terminals with full-coherent antennas, $\alpha_{PTRS}^{PUSCH}$ is 4.77;

for terminals with partial-coherent antennas, $\alpha_{PTRS}^{PUSCH}$ is 0 or 3;

for terminals with non-coherent antennas, $\alpha_{PTRS}^{PUSCH}$ is 0;

$Q_p$=2:

for terminals with partial-coherent antennas, $\alpha_{PTRS}^{PUSCH}$ is 3 or 6;

for terminals with non-coherent antennas, $\alpha_{PTRS}^{PUSCH}$ is 3;

$Q_p$=3:

for terminals with partial-coherent antennas, $\alpha_{PTRS}^{PUSCH}$ is 4.77;

for terminals with non-coherent antennas, $\alpha_{PTRS}^{PUSCH}$ is 4.77.

4) When the number of data streams of the PUSCH is 4:

$Q_p$=1:

for terminals with full-coherent antennas, $\alpha_{PTRS}^{PUSCH}$ is 6;

for terminals with partial-coherent antennas, $\alpha_{PTRS}^{PUSCH}$ is 3;

for terminals with non-coherent antennas, $\alpha_{PTRS}^{PUSCH}$ is 0;

$Q_p$=2:

for terminals with partial-coherent antennas, $\alpha_{PTRS}^{PUSCH}$ is 6;

for terminals with non-coherent antennas, $\alpha_{PTRS}^{PUSCH}$ is 3;

$Q_p$=3:

for terminals with partial-coherent antennas, $\alpha_{PTRS}^{PUSCH}$ is 4.77;

for terminals with non-coherent antennas, $\alpha_{PTRS}^{PUSCH}$ is 4.77;

$Q_p$=4:

for terminals with partial-coherent antennas, $\alpha_{PTRS}^{PUSCH}$ is 6;

for terminals with non-coherent antennas, $\alpha_{PTRS}^{PUSCH}$ is 6.

5) When the number of data streams of the PUSCH is 5:

$Q_p$=1:

for terminals with full-coherent antennas, $\alpha_{PTRS}^{PUSCH}$ is 7;

For terminals with partial-coherent antennas, $\alpha_{PTRS}^{PUSCH}$ is 0 or 3 or 4.77;

for terminals with non-coherent antennas, $\alpha_{PTRS}^{PUSCH}$ is 0;

$Q_p$=2:

for terminals with partial-coherent antennas, $\alpha_{PTRS}^{PUSCH}$ is 3 or 6 or 7.78 or 9;

for terminals with non-coherent antennas, $\alpha_{PTRS}^{PUSCH}$ is 3;

$Q_p$=3:

for terminals with partial-coherent antennas, $\alpha_{PTRS}^{PUSCH}$ is 4.77 or 7.78;

for terminals with non-coherent antennas, $\alpha_{PTRS}^{PUSCH}$ is 4.77;

$Q_p$=4:

For terminals with partial-coherent antennas, $\alpha_{PTRS}^{PUSCH}$ is 6 or 9;

for terminals with non-coherent antennas, $\alpha_{PTRS}^{PUSCH}$ is 6.

6) When the number of data streams of the PUSCH is 6:

$Q_p$=1:

for terminals with full-coherent antennas, $\alpha_{PTRS}^{PUSCH}$ is 7.78;

for terminals with partial-coherent antennas, $\alpha_{PTRS}^{PUSCH}$ is 0 or 3 or 4.77;

for terminals with non-coherent antennas, $\alpha_{PTRS}^{PUSCH}$ is 0;

$Q_p$=2:

for terminals with partial-coherent antennas, $\alpha_{PTRS}^{PUSCH}$ is 3 or 6 or 7.88 or 9;

for terminals with non-coherent antennas, $\alpha_{PTRS}^{PUSCH}$ is 3;

$Q_p$=3:

for terminals with partial-coherent antennas, $\alpha_{PTRS}^{PUSCH}$ *is* 4.77 or 7.78;

for terminals with non-coherent antennas, $\alpha_{PTRS}^{PUSCH}$ is 4.77;

$Q_p$=4:

for terminals with partial-coherent antennas, $\alpha_{PTRS}^{PUSCH}$ *is* 6 or 9;

for terminals with non-coherent antennas, $\alpha_{PTRS}^{PUSCH}$ is 6.

7) When the number of data streams of the PUSCH is 7:

$Q_p$=1:

for terminals with full-coherent antennas, $\alpha_{PTRS}^{PUSCH}$ is 8.45;

for terminals with partial-coherent antennas, $\alpha_{PTRS}^{PUSCH}$ is 0 or 3 or 4.77 or 6;

for terminals with non-coherent antennas, $\alpha_{PTRS}^{PUSCH}$ is 0;

$Q_p$=2:

for terminals with partial-coherent antennas, $\alpha_{PTRS}^{PUSCH}$ is 3 or 6 or 7.78 or 9;

for terminals with non-coherent antennas, $\alpha_{PTRS}^{PUSCH}$ is 3;

$Q_p$=3:

for terminals with partial-coherent antennas, $\alpha_{PTRS}^{PUSCH}$ is 4.77 or 7.78;

for terminals with non-coherent antennas, $\alpha_{PTRS}^{PUSCH}$ is 4.77;

$Q_p$=4:

for terminals with partial-coherent antennas, $\alpha_{PTRS}^{PUSCH}$ is 6 or 9;

for terminals with non-coherent antennas, $\alpha_{PTRS}^{PUSCH}$ is 6.

8) When the number of data streams of the PUSCH is 8:

$Q_p$=1:

for terminals with full-coherent antennas, $\alpha_{PTRS}^{PUSCH}$ is 9;

for terminals with partial-coherent antennas, $\alpha_{PTRS}^{PUSCH}$ is 6 or 3;

for terminals with non-coherent antennas, $\alpha_{PTRS}^{PUSCH}$ is 0;

$Q_p$=2:

for terminals with partial-coherent antennas, $\alpha_{PTRS}^{PUSCH}$ is 9 or 6;

for terminals with non-coherent antennas, $\alpha_{PTRS}^{PUSCH}$ is 3;

$Q_p$=3:

for terminals with partial-coherent antennas, $\alpha_{PTRS}^{PUSCH}$ is 7.78;

for terminals with non-coherent antennas, $\alpha_{PTRS}^{PUSCH}$ is 4.77;

$Q_p$=4:

for terminals with partial-coherent antennas, $\alpha_{PTRS}^{PUSCH}$ is 9;

for terminals with non-coherent antennas, $\alpha_{PTRS}^{PUSCH}$ is 6.

It should be noted that when the transmission mode of PUSCH is configured as non-codebook, its corresponding second EPRE ratio $\alpha_{PTRS}^{PUSCH}$ is the same as that for a non-coherent case.

In addition, the value of the second EPRE ratio can be configured by RRC parameter *ptrs-Power*. In a case of full-coherent antenna, partial-coherent antenna, and non-coherent antenna, corresponding second EPRE ratios $\alpha_{PTRS}^{PUSCH}$ *are* the same, and their values are all given in a case of full-coherent antenna.

In an implementation, in a case that the DMRS used for transmitting the PUSCH is the second DMRS, the maximum number of data streams of the PUSCH is 6, that is, a value range of the number of data streams of the PUSCH is [1,6].

The following describes this implementation by using examples:

When the DMRS used for PUSCH transmission is the second DMRS, a maximum of 6 second DMRS ports can be supported on a single OFDM symbol, and the maximum number of PUSCH data streams is 6. In this case, if the terminal supports transmission of 1 to 6 PUSCH data streams, $\alpha_{PTRS}^{PUSCH}$ is related to the number of data streams of the PUSCH (that is, L3, where $1 \leq L3 \leq 6$), an antenna correlation capability of the UE, and the number of PTRS ports associated with PUSCH (that is, $Q_p$, where $Q_p$ is 1, 2, 3 or 4), where the antenna correlation of the UE and the maximum number $Q_p$ of supported PTRS ports are related to the UE capability, and the UE can perform capability reporting for reference for the network-side device to configure PTRS.

1) When the number of data streams of the PUSCH is 1:

$Q_p$ =1, and is $\alpha_{PTRS}^{PUSCH}$ 0 for terminals with full-coherent antennas.

2) When the number of data streams of the PUSCH is 2:

$Q_p$=1:

for terminals with full-coherent antennas, $\alpha_{PTRS}^{PUSCH}$ is 3;

for terminals with partial-coherent antennas, $\alpha_{PTRS}^{PUSCH}$ is 0;

for terminals with non-coherent antennas, $\alpha_{PTRS}^{PUSCH}$ is 0;

$Q_p$=2:

for terminals with partial-coherent antennas, $\alpha_{PTRS}^{PUSCH}$ is 3; and

for terminals with non-coherent antennas, $\alpha_{PTRS}^{PUSCH}$ is 3.

3) When the number of data streams of the PUSCH is 3,

$Q_p$=1:

for terminals with full-coherent antennas, $\alpha_{PTRS}^{PUSCH}$ is 4.77;

for terminals with partial-coherent antennas, $\alpha_{PTRS}^{PUSCH}$ is 0 or 3;

for terminals with non-coherent antennas, $\alpha_{PTRS}^{PUSCH}$ is 0;

$Q_p$=2:

for terminals with partial-coherent antennas, $\alpha_{PTRS}^{PUSCH}$ is 3 or 6;

for terminals with non-coherent antennas, $\alpha_{PTRS}^{PUSCH}$ is 3;

$Q_p$=3:

for terminals with partial-coherent antennas, $\alpha_{PTRS}^{PUSCH}$ is 4.77; and

for terminals with non-coherent antennas, $\alpha_{PTRS}^{PUSCH}$ is 4.77.

4) When the number of data streams of the PUSCH is 4:

$Q_p=1$:

for terminals with full-coherent antennas, $\alpha_{PTRS}^{PUSCH}$ is 6;

for terminals with partial-coherent antennas, $\alpha_{PTRS}^{PUSCH}$ is 3;

for terminals with non-coherent antennas, $\alpha_{PTRS}^{PUSCH}$ is 0;

$Q_p=2$:

for terminals with partial-coherent antennas, $\alpha_{PTRS}^{PUSCH}$ is 6;

for terminals with non-coherent antennas, $\alpha_{PTRS}^{PUSCH}$ is 3;

$Q_p=3$:

for terminals with partial-coherent antennas, $\alpha_{PTRS}^{PUSCH}$ is 4.77;

for terminals with non-coherent antennas, $\alpha_{PTRS}^{PUSCH}$ is 4.77;

$Q_p=4$:

for terminals with partial-coherent antennas, $\alpha_{PTRS}^{PUSCH}$ is 6; and

for terminals with non-coherent antennas, $\alpha_{PTRS}^{PUSCH}$ is 6.

5) When the number of data streams of the PUSCH is 5:

$Q_p=1$:

for terminals with full-coherent antennas, $\alpha_{PTRS}^{PUSCH}$ is 7;

for terminals with partial-coherent antennas, $\alpha_{PTRS}^{PUSCH}$ is 0 or 3 or 4.77;

for terminals with non-coherent antennas, $\alpha_{PTRS}^{PUSCH}$ is 0;

$Q_p=2$:

for terminals with partial-coherent antennas, $\alpha_{PTRS}^{PUSCH}$ is 3 or 6 or 7.78 or 9;

for terminals with non-coherent antennas, $\alpha_{PTRS}^{PUSCH}$ is 3;

$Q_p=3$:

for terminals with partial-coherent antennas, $\alpha_{PTRS}^{PUSCH}$ is 4.77 or 7.78;

for terminals with non-coherent antennas, $\alpha_{PTRS}^{PUSCH}$ is 4.77;

$Q_p=4$:

for terminals with partial-coherent antennas, $\alpha_{PTRS}^{PUSCH}$ is 6 or 9; and

for terminals with non-coherent antennas, $\alpha_{PTRS}^{PUSCH}$ is 6.

6) When the number of data streams of the PUSCH is 6:

$Q_p$=1:

for terminals with full-coherent antennas, $\alpha_{PTRS}^{PUSCH}$ is 7.78;

for terminals with partial-coherent antennas, $\alpha_{PTRS}^{PUSCH}$ is 0 or 3 or 4.77;

for terminals with non-coherent antennas, $\alpha_{PTRS}^{PUSCH}$ is 0;

$Q_p$=2:

for terminals with partial-coherent antennas, $\alpha_{PTRS}^{PUSCH}$ is 3 or 6 or 7.88 or 9;

for terminals with non-coherent antennas, $\alpha_{PTRS}^{PUSCH}$ is 3;

$Q_p$=3:

for terminals with partial-coherent antennas, $\alpha_{PTRS}^{PUSCH}$ is 4.77 or 7.78;

for terminals with non-coherent antennas, $\alpha_{PTRS}^{PUSCH}$ is 4.77;

$Q_p$=4:

for terminals with partial-coherent antennas, $\alpha_{PTRS}^{PUSCH}$ is 6 or 9; and

for terminals with non-coherent antennas, $\alpha_{PTRS}^{PUSCH}$ is 6.

It should be noted that when the transmission mode of PUSCH is configured as non-codebook, its corresponding second EPRE ratio $\alpha_{PTRS}^{PUSCH}$ is the same as that for a case of non-coherent antennas.

In addition, the value of the second EPRE ratio can be configured by RRC parameter *ptrs-Power.* In a case of full-coherent antenna, partial-coherent antenna, and non-coherent antenna, corresponding second EPRE ratios $\alpha_{PTRS}^{PUSCH}$ *are* the same, and their values are all given in a case of full-coherent antenna.

Optionally, in a case that a DMRS used for transmitting the PUSCH is the first DMRS or a second DMRS, second EPRE ratios corresponding to different PTRS ports are the same, or second EPRE ratios corresponding to different PTRS ports are different.

For example, when the number of data streams in PUSCH is odd (for example, 3, 5, or 7), the second EPRE ratios corresponding to different PTRS ports are different.

Optionally, in a case that one PTRS port is configured for the terminal, the DMRS port associated with the PTRS port is one of the first M scheduled DMRS ports, and a value of M is determined based on the number of data streams of the PUSCH;

or,

in a case that at least two PTRS ports are configured for the terminal, a DMRS port associated with each PTRS port of the at least two PTRS ports is one DMRS port of all DMRS ports sharing each PTRS port.

One PTRS port is configured for the terminal, that is, the PTRS includes one PTRS port. At least two PTRS ports are configured for the terminal, that is, the PTRS includes at least two PTRS ports. For example, the above terminal is configured with 2 PTRS ports or 4 PTRS ports.

Optionally, in a case that the number of data streams of the PUSCH is less than or equal to 4, the value of M is the number of data streams of the PUSCH ;

and/or

in a case that the number of data streams of the PUSCH is greater than 4, the value of M is 4.

In a case that one PTRS port is configured for the terminal, using the number of data streams of the PUSCH as an example, when the number of data streams of the PUSCH is less than or equal to 4, the network-side device can indicate through DCI that one of the first L scheduled DMRS ports is associated with the PTRS port; when the number of data streams of the PUSCH is greater than 4, the network-side device can indicate through DCI that one of the first four scheduled DMRS ports is associated with the PTRS port. In this case, the DMRS port associated with the PTRS port can be indicated by a 2-bit PTRS-DMRS association field in the DCI.

For example, using the terminal configured with PTRS port 0 as an example, the network-side device can indicate a DMRS port associated with PTRS port 0 through the PTRS-DMRS association field in the DCI, where a size of PTRS-DMRS association field is 2 bits. Table 11 shows a correspondence between indicated values (value) in the PTRS-DMRS association field and DMRS ports, and the DMRS port is a DMRS port used by the scheduled PUSCH.

Table 11

| Indicated value (Value) | DMRS port |
|---|---|
| 0 | 1st scheduled DMRS port (that is, 1st scheduled DMRS port). |
| 1 | 2nd scheduled DMRS port (that is, 2nd scheduled DMRS port). |
| 2 | 3rd scheduled DMRS port (that is, 3rd scheduled DMRS port). |
| 3 | 4th scheduled DMRS port (that is, 4th scheduled DMRS port). |

For example, when the data stream of PUSCH is 8, the 8 data streams respectively correspond to 8 scheduled first DMRS ports, and the PTRS-DMRS association field indicates that one of the first 4 ports in the 8 ports is associated with PTRS port 0. For another example, when the data stream of PUSCH is 6, the 6 data streams respectively correspond to 6 scheduled second DMRS ports, and the PTRS-DMRS association field indicates that one of the first 4 ports in the 6 ports is associated with PTRS port 0.

In a case that at least two PTRS ports are configured for the terminal, the DMRS port associated with each PTRS port in at least two PTRS ports is one of all DMRS ports sharing the PTRS port, for example, when at least two PTRS ports are configured for the terminal (namely PTRS port 0 and PTRS port 1), a DMRS port associated with PTRS port 0 is one of all DMRS ports sharing PTRS port 0, and a DMRS port associated with PTRS port 1 is one of all DMRS ports sharing PTRS port 1; when 4 PTRS ports are configured for the terminal (namely PTRS port 0, PTRS port 1, PTRS port 2, and PTRS port 3), a DMRS port associated with PTRS port 0 is one of all DMRS ports sharing PTRS port 0, a DMRS port associated with PTRS port 1 is one of all DMRS ports sharing PTRS port 1, a DMRS port associated with PTRS port 2 is one of all DMRS ports sharing PTRS port 2, and a DMRS port associated with PTRS port 3 is one of all DMRS ports sharing PTRS port 3.

Optionally, a DMRS port associated with each PTRS port of the at least two PTRS ports is one of the first two DMRS ports in all DMRS ports sharing each PTRS port. It can be understood that when the number of all DMRS ports sharing each PTRS port is 1, the DMRS port associated with each PTRS port of the at least two PTRS ports is the DMRS port.

In some optional embodiments, in a case that at least two PTRS ports are configured for the terminal, when the number of data streams of the PUSCH is less than or equal to 4, the network-side device indicates through the PTRS-DMRS association field in DCI that DMRS port A is associated with PTRS port 0 and/or DMRS port B is associated with PTRS port 1. The DMRS port A is one DMRS port of all DMRS ports sharing PTRS port 0, and the DMRS port B is one DMRS port of all DMRS ports sharing PTRS port 1. If the number of all DMRS ports sharing each PTRS port is 1, the DMRS port associated with each PTRS port of the at least two PTRS ports is the DMRS port. When the number of data streams of the PUSCH is greater than 4, the network-side device indicates through the PTRS-DMRS association field in DCI that DMRS port A is associated with PTRS port 0 and/or indicates that DMRS port B is associated with PTRS port 1, where DMRS port A is one of the first two DMRS ports in all the DMRS ports sharing PTRS port 0 and DMRS port B is one of the first two DMRS ports in all the DMRS ports sharing PTRS port 1. In the above embodiment, the DMRS port associated with the PTRS port can be indicated by a 2-bit PTRS-DMRS association field in the DCI.

The following uses examples to describe cases that the terminal is configured with two PTRS ports and the terminal is configured with four PTRS ports:

Case 1: The terminal is configured with PTRS port 0 and PTRS port 1.

The network-side device can indicate DMRS ports associated with PTRS port 0 and PTRS port 1 through the PTRS-DMRS association field in DCI, where a size of the PTRS-DMRS association field is 2 bits. Table 12 shows a correspondence between indicated values in the PTRS-DMRS association field and DMRS ports, and the DMRS port is a DMRS port used by the scheduled PUSCH.

**Table 12**

| MSB value | DMRS port | LSB value | DMRS port |
|---|---|---|---|
| 0 | First DMRS port sharing PTRS port 0 (that is, 1st DMRS port which shares PTRS port 0) | 0 | First DMRS port sharing PTRS port 1 (that is, 1st DMRS port which shares PTRS port 1) |
| 1 | Second DMRS port sharing PTRS port 0 (that is, 2nd DMRS port which shares PTRS port 0) | 1 | Second DMRS port sharing PTRS port 1 (that is, 2nd DMRS port which shares PTRS port 1) |

For example, when there are 8 data streams of the PUSCH, the 8 data streams respectively correspond to 8 scheduled first DMRS ports, among which 4 first DMRS ports share PTRS port 0 and the other 4 first DMRS ports share PTRS port 1. However, a high-order bit of the PTRS-DMRS association field merely indicate one of the first two ports in the four first DMRS ports sharing PTRS port 0; and a low-order bit of the PTRS-DMRS association field merely indicate one of the first two ports in the four first DMRS ports sharing PTRS port 1. It should be noted that the above DMRS port indication method is also applicable to a case that the number of data streams of the PUSCH is less than 8.

Case 2: The terminal is configured with PTRS port 0, PTRS port 1, PTRS port 2, and PTRS port 3.

The network-side device can indicate DMRS ports associated with PTRS port 0, PTRS port 1, PTRS port 2, and PTRS port 3 through the PTRS-DMRS association field in DCI, where a size of the PTRS-DMRS association field is 4 bits. The 1st bit in the PTRS-DMRS association field starting from the upper bit is used to indicate the DMRS port associated with PTRS port 0, the 2nd bit is used to indicate the DMRS port associated with PTRS port 1, the 3rd bit is used to indicate the DMRS port associated with PTRS port 2, and the 4th bit is used to indicate the DMRS port associated with PTRS port 3.

Optionally, the DMRS port associated with the PTRS port is a DMRS port corresponding to a target codeword, and the target codeword is one codeword transmitted by the PUSCH.

Optionally, in a case that a codeword transmitted by the PUSCH is one codeword, the target codeword is the codeword transmitted by the PUSCH;
and/or
in a case that a codeword transmitted by the PUSCH includes two codewords, the target codeword is a codeword with a larger MCS order in the two codewords transmitted by the PUSCH.

It can be understood that the codeword transmitted by the PUSCH being one codeword corresponds to a case that the number of data streams of the PUSCH is less than or equal to 4. The codeword transmitted by the PUSCH including two codewords corresponds to a case that the number L of data streams of the PUSCH is greater than 4.

In this embodiment of this application, in a case that a codeword transmitted by the PUSCH includes two codewords, the target codeword is a codeword with a larger MCS order in the two codewords transmitted by the PUSCH, that is, the codeword is selected based on the MCS order, which can reduce overheads for indicating a PTRS-DMRS association relationship.

Optionally, the target codeword is the 1st codeword of the two codewords in a case that MCS orders of the two codewords are the same.

For example, the first codeword may be codeword 0 or a codeword with a smaller index in the two codewords.

Optionally, in a case that one PTRS port is configured for the terminal, the DMRS port associated with the PTRS port is one of all scheduled DMRS ports corresponding to the target codeword;
and/or
in a case that at least two PTRS ports are configured for the terminal, the DMRS port associated with each PTRS port is one of all DMRS ports sharing each PTRS port corresponding to the target codeword.

For example, in a case that one PTRS port is configured for the terminal, the DMRS port associated with the PTRS port is one of the first R scheduled DMRS ports corresponding to the target codeword, where R is a positive integer.

The following provides illustrative examples of the embodiments of this application for different scenarios. For ease of description, the number of data streams of the PUSCH is referred to as L.

Case 1: One PTRS port is configured for the terminal (such as PTRS port 0).

When the number of data streams of the PUSCH is less than or equal to 4, that is, the codeword transmitted by the PUSCH is one codeword, the network-side device can indicate through the PTRS-DMRS association field in DCI that one of the first R=L scheduled DMRS ports of the target codeword (that is, the codeword transmitted by PUSCH) is associated with the PTRS port. When the number of data streams of the PUSCH is greater than 4, that is, the codeword transmitted by the PUSCH is two codewords, the network-side device can indicate through the PTRS-DMRS association field in DCI that one of the first R=P scheduled DMRS ports in the target codeword is associated with the PTRS port. P is a positive integer, the target codeword is a codeword with a larger MCS order in the two codewords transmitted by the PUSCH, and when the MCS orders of the two codewords are the same, the target codeword is the 1st codeword of the two codewords.

For example, the network-side device can indicate a DMRS port associated with PTRS port 0 through the PTRS-DMRS association field in DCI, where a size of the PTRS-DMRS association field is 2 bits. Table 13 shows a correspondence between indicated values (value) in the PTRS-DMRS association field and DMRS ports, and the DMRS port is a DMRS port on the target codeword.

**Table 13**

| Indicated value (Value) | DMRS port |
|---|---|
| 0 | 1st scheduled DMRS port (that is, 1st scheduled DMRS port). |
| 1 | 2nd scheduled DMRS port (that is, 2nd scheduled DMRS port). |
| 2 | 3rd scheduled DMRS port (that is, 3rd scheduled DMRS port). |
| 3 | 4th scheduled DMRS port (that is, 4th scheduled DMRS port). |

When the number of data streams of the PUSCH is less than or equal to 4, the codeword transmitted by the PUSCH is one codeword, and the target codeword is the codeword transmitted by the PUSCH in this case. When the number of data streams of the PUSCH is greater than 4, the codeword transmitted by the PUSCH is two codewords, and the target codeword is a codeword with a larger MCS order in the two codewords. However, if the MCS orders of the two codewords are the same, the target codeword is the 1st codeword of the two codewords, for example, codeword 0.

For example, when there are 8 data streams of the PUSCH and the codewords transmitted by the PUSCH are two codewords, the 8 data streams correspond to 8 scheduled first DMRS ports respectively. If the MCS of the 2nd codeword is larger, the PTRS-DMRS association field indicates that one of the four ports on the second codeword is associated with PTRS port 0.

For another example, when there are 6 data streams of the PUSCH and the codewords transmitted by the PUSCH are two codewords, the 6 data streams correspond to 6 scheduled first DMRS ports respectively. If the MCS of the 2nd codeword is larger, the PTRS-DMRS association field indicates that one of the three ports on the second codeword is associated with PTRS port 0.

Case 2: Two PTRS ports are configured for the terminal (such as PTRS port 0 and PTRS port 1).

When the number of data streams L of the PUSCH is less than or equal to 4, that is, the codeword transmitted by the PUSCH is one codeword, the network-side device can indicate through the PTRS-DMRS association field in DCI that DMRS port A is associated with PTRS port 0 and/or DMRS port B is associated with PTRS port 1, where DMRS port A is one of all DMRS ports sharing PTRS port 0 and DMRS port B is one of all DMRS ports sharing PTRS port 1. When the number L of data streams of the PUSCH is greater than 4, that is, the codeword transmitted by the PUSCH is two codewords, the network-side device can indicate through the PTRS-DMRS association field in DCI that DMRS port A on the target codeword is associated with PTRS port 0 and/or that DMRS port B on the target codeword is associated with PTRS port 1. The DMRS port A is one of all DMRS ports sharing PTRS port 0 on the target codeword, and the DMRS port B is one of all DMRS ports sharing PTRS port 1 on the target codeword.

For example, the network-side device can indicate DMRS ports associated with PTRS port 0 and PTRS port 1 through the PTRS-DMRS association field in DCI, where a size of the PTRS-DMRS association field is 2 bits. Table 14 shows a correspondence between indicated values in the PTRS-DMRS association field and DMRS ports, and the DMRS port is a DMRS port on the target codeword.

**Table 14**

| MSB value | DMRS port | LSB value | DMRS port |
|---|---|---|---|
| 0 | First DMRS port sharing PTRS port 0 (that is, 1st DMRS port which shares PTRS port 0) | 0 | First DMRS port sharing PTRS port 1 (that is, 1st DMRS port which shares PTRS port 1) |
| 1 | Second DMRS port sharing PTRS port 0 (that is, 2nd DMRS port which shares PTRS port 0) | 1 | Second DMRS port sharing PTRS port 1 (that is, 2nd DMRS port which shares PTRS port 1) |

For example, when there are 8 data streams of the PUSCH, that is, the codewords transmitted by the PUSCH are two codewords, the 8 data streams correspond to 8 scheduled first DMRS ports respectively in this case. If the MCS of the 2nd codeword is larger, the PTRS-DMRS association field indicates four ports on the 2nd codeword. A high-order bit of the PTRS-DMRS association field indicates one of the two ports sharing PTRS port 0 on the 2nd codeword; and a low-order bit of the PTRS-DMRS association field indicates one of the two ports sharing PTRS port 1 on the 2nd codeword.

Case 3: Four PTRS ports are configured for the terminal (such as PTRS port 0, PTRS port 1, PTRS port 2, and PTRS port 3).

In this case, DMRS port A is associated with PTRS port 0, DMRS port B is associated with PTRS port 1, DMRS port C is associated with PTRS port 2, and DMRS port D is associated with PTRS port 3. The above DMRS port A, DMRS port B, DMRS port C, and DMRS port D are all DMRS ports on the target codeword. When the number of data streams of the PUSCH is less than or equal to 4, the target codeword is one codeword transmitted by PUSCH, for example, codeword 0. When the number of data streams of the PUSCH is greater than 4, the target codeword is a codeword with a larger MCS order in the two codewords transmitted by the PUSCH. When the MCS orders of the two codewords are the same, the target codeword is the 1st codeword of the two codewords, for example, codeword 0.

For example, the configured 4 PTRS ports have a correspondence relationship with the 4 DMRS ports on the target codeword respectively. For example, when there are 8 data streams of the PUSCH and the codewords transmitted by the PUSCH are two codewords, the 8 data streams correspond to 8 scheduled first DMRS ports respectively. If the MCS of the 2nd codeword is larger, the 2nd codeword is the target codeword. In this case, the 4 DMRS ports on the 2nd codeword are respectively associated with the configured 4 PTRS ports, so the PTRS-DMRS association field is not needed for indication.

Optionally, in a case that T PTRS ports are configured for the terminal, if DMRS ports associated with at least two of the T PTRS ports correspond to different codewords, a time domain density of the at least two PTRS ports is determined based on an MCS order of a first codeword, and the first codeword is a codeword with a largest or smallest MCS order in codewords corresponding to the DMRS ports associated with the at least two PTRS ports, where T is an integer greater than or equal to 2.

For example, if the DMRS ports associated with PTRS port 0 and PTRS port 1 correspond to different codewords, time domain densities of PTRS port 0 and PTRS port 1 are determined based on an MCS order of the first codeword. It can be understood that the time domain densities of PTRS port 0 and PTRS port 1 are the same in this case.

Optionally, a time domain density of a PTRS port corresponding to a retransmitted codeword is the same as a time domain density of a PTRS port corresponding to an initial transmitted codeword;

or,

a time domain density of a PTRS port corresponding to a retransmitted codeword is the same as a time domain density of a PTRS port corresponding to an MCS order of an initial transmitted codeword.

To sum up, this embodiment of this application can effectively optimize the transmit power of the PTRS, reduce the collision of PTRS ports between multiple terminals, and provide PTRS indication and transmission manners when the uplink PUSCH uses more data streams, so that phase noise estimation for uplink and downlink data transmission is more accurate.

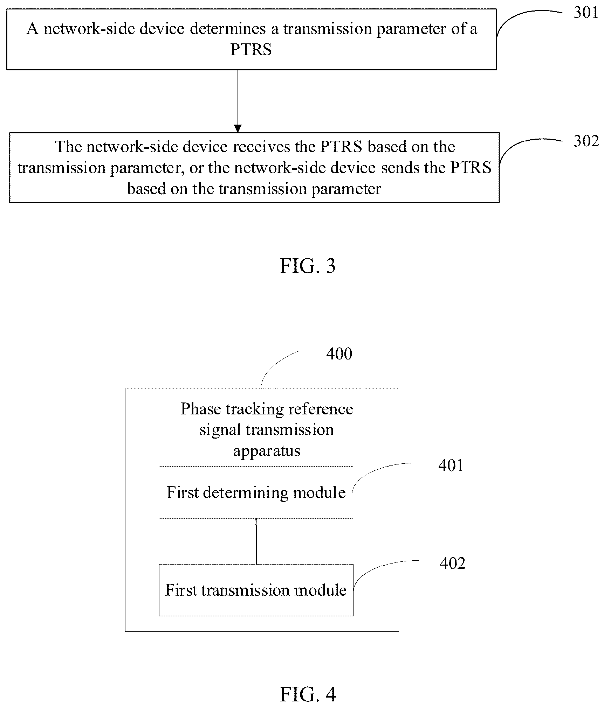

Referring to FIG. 3, FIG. 3 is a flowchart of a phase tracking reference signal transmission method according to an embodiment of this application. The method is applied to a network-side device. As shown in FIG. 3, the method includes the following steps.

Step 301: The network-side device determines a transmission parameter of a PTRS.

Step 302: The network-side device receives the PTRS based on the transmission parameter, or the network-side device sends the PTRS based on the transmission parameter.

The PTRS includes at least one PTRS port, and the transmission parameter includes at least one of the following: a frequency domain resource offset for the PTRS port corresponding to a first demodulation reference signal DMRS port, an energy per resource element EPRE ratio of the PTRS port to a transmission channel, and a DMRS port associated with the PTRS port; and

the first DMRS is a DMRS that multiplexes a port in a same code division multiplexing CDM group by using a first frequency domain orthogonal cover code FD-OCC sequence, a length of the first FD-OCC sequence is greater than 2, the transmission channel includes a physical downlink shared channel PDSCH or a physical uplink shared channel PUSCH, a maximum number of data streams supported by the PDSCH is greater than 6, a maximum number of data streams supported by the PUSCH is greater than 4, and the DMRS port associated with the PTRS port is used for transmitting the PUSCH.

It can be understood that for the uplink PTRS, the network-side device receives the PTRS from the terminal based on the transmission parameter; and for the downlink PTRS, the network-side device sends the PTRS to the terminal based on the transmission parameter.

Optionally, the frequency domain resource offset includes at least one of the following:

a resource element RE offset; and
a resource block RB offset.

Optionally, RE offsets for the PTRS port corresponding to at least two first DMRS ports are different, and the at least two first DMRS ports belong to a same CDM group.

Optionally, the RE offsets for the PTRS port corresponding to the at least two first DMRS ports sequentially and incrementally correspond, based on an incrementing order of indexes of the at least two first DMRS ports, to subcarriers occupied by the at least two first DMRS ports.

Optionally, RE offsets for the PTRS port corresponding to part of first DMRS ports are the same, and the part of first DMRS ports belong to a same CDM group.

Optionally, a difference between port indexes of the part of first DMRS ports is N, and N is a positive integer.

Optionally, an RB offset for the PTRS port corresponding to a first port group is different from an RB offset for the PTRS port corresponding to a second port group;

or,

an RB offset for the PTRS port corresponding to a first port group is the same as an RB offset for the PTRS port corresponding to a second port group; where
the first port group and the second port group each include at least one first DMRS port.

Optionally, in a case that an RB offset for the PTRS port corresponding to the first port group is different from an RB offset for the PTRS port corresponding to the second port group, the RB offset for the PTRS port corresponding to the first port group and the RB offset for the PTRS port corresponding to the second port group are determined based on first RB offset signaling; or

a difference between the RB offset for the PTRS port corresponding to the first port group and the RB offset for the PTRS port corresponding to the second port group is determined based on a frequency domain density factor of the PTRS port; or
a difference between the RB offset for the PTRS port corresponding to the first port group and the RB offset for the PTRS port corresponding to the second port group is K, and K is a positive integer.

Optionally, the first RB offset signaling is used to separately indicate the RB offset for the PTRS port corresponding to the first port group and the RB offset for the PTRS port corresponding to the second port group;
or,
the first RB offset signaling is used to indicate the difference between the RB offset for the PTRS port corresponding to the first port group and the RB offset for the PTRS port corresponding to the second port group.

Optionally, the EPRE ratio of the PTRS port to the transmission channel includes one of the following:

a first EPRE ratio of the PTRS port to the PDSCH on each RE of each data stream; and
a second EPRE ratio of the PUSCH to the PTRS port on each RE of each data stream.

Optionally, in a case that a DMRS used for transmitting the PDSCH is the first DMRS, the first EPRE ratio is determined based on the number of data streams of the PDSCH, or the first EPRE ratio is 0 dB.

Optionally, in a case that a DMRS used for transmitting the PUSCH is the first DMRS or a second DMRS, the second EPRE ratio is determined based on at least one of the following parameters:

the number of data streams of the PUSCH;
antenna correlation capability information of the terminal; and
the number of PTRS ports; where
in a case that the DMRS used for transmitting the PUSCH is the first DMRS, the maximum number of data streams supported by the PUSCH is 8; and in a case that the DMRS used for transmitting the PUSCH is the second DMRS, the maximum number of data streams supported by the PUSCH is 6, where the second DMRS is a DMRS that multiplexes a port in a same CDM group by using a second FD-OCC sequence, and a length of the second FD-OCC sequence is equal to 2.

Optionally, in a case that a DMRS used for transmitting the PUSCH is the first DMRS or a second DMRS, second EPRE ratios corresponding to different PTRS ports are the same, or second EPRE ratios corresponding to different PTRS ports are different.

Optionally, in a case that one PTRS port is configured for the terminal, the DMRS port associated with the PTRS port is one of the first M scheduled DMRS ports, and a value of M is determined based on the number of data streams of the PUSCH;
or,
in a case that at least two PTRS ports are configured for the terminal, a DMRS port associated with each PTRS port of the at least two PTRS ports is one DMRS port of all DMRS ports sharing each PTRS port.

Optionally, in a case that the number of data streams of the PUSCH is less than or equal to 4, the value of M is the number of data streams of the PUSCH;

and/or

in a case that the number of data streams of the PUSCH is greater than 4, the value of M is 4.

Optionally, in a case that at least two PTRS ports are configured for the terminal, a DMRS port associated with each PTRS port of the at least two PTRS ports is one of the first two DMRS ports in all DMRS ports sharing each PTRS port.

Optionally, the DMRS port associated with the PTRS port is a DMRS port corresponding to a target codeword, and the target codeword is one codeword transmitted by the PUSCH.

Optionally, in a case that a codeword transmitted by the PUSCH is one codeword, the target codeword is the codeword transmitted by the PUSCH;

and/or

in a case that a codeword transmitted by the PUSCH includes two codewords, the target codeword is a codeword with a larger modulation and coding scheme MCS order in the two codewords transmitted by the PUSCH.

Optionally, the target codeword is the 1st codeword of the two codewords in a case that MCS orders of the two codewords are the same.

Optionally, in a case that one PTRS port is configured for the terminal, the DMRS port associated with the PTRS port is one of all scheduled DMRS ports corresponding to the target codeword;

and/or

in a case that at least two PTRS ports are configured for the terminal, the DMRS port associated with each PTRS port is one of all DMRS ports sharing each PTRS port corresponding to the target codeword.

Optionally, in a case that T PTRS ports are configured for the terminal, if DMRS ports associated with at least two of the T PTRS ports correspond to different codewords, a time domain density of the at least two PTRS ports is determined based on an MCS order of a first codeword, and the first codeword is a codeword with a largest or smallest MCS order in codewords corresponding to the DMRS ports associated with the at least two PTRS ports, where T is an integer greater than or equal to 2.

Optionally, a time domain density of a PTRS port corresponding to a retransmitted codeword is the same as a time domain density of a PTRS port corresponding to an initial transmitted codeword;

or,

a time domain density of a PTRS port corresponding to a retransmitted codeword is the same as a time domain density of a PTRS port corresponding to an MCS order of an initial transmitted codeword.

It should be noted that for implementation of this embodiment, reference may be made to the related description of the embodiment shown in FIG. 2, and details are not repeated here.

It should be noted that, for the phase tracking reference signal transmission method provided by the embodiments of this application, the execution body may be a phase tracking reference signal transmission apparatus, or a control module for executing the phase tracking reference signal transmission method in the phase tracking reference signal transmission apparatus. In the embodiments of this application, the phase tracking reference signal transmission apparatus provided in the embodiments of this application is described by using the phase tracking reference signal transmission method being executed by the phase tracking reference signal transmission apparatus as an example.

Referring to FIG. 4, FIG. 4 is a structural diagram of a phase tracking reference signal transmission apparatus according to an embodiment of this application. As shown in FIG. 4, the phase tracking reference signal transmission apparatus 400 includes:

a first determining module 401, configured to determine a transmission parameter for a phase tracking reference signal PTRS; and

a first transmission module 402, configured to send the PTRS based on the transmission parameter, or receive, for the terminal, the PTRS based on the transmission parameter; where

the PTRS includes at least one PTRS port, and the transmission parameter includes at least one of the following: a frequency domain resource offset for the PTRS port corresponding to a first demodulation reference signal DMRS port, an energy per resource element EPRE ratio of the PTRS port to a transmission channel, and a DMRS port associated with the PTRS port; and

the first DMRS is a DMRS that multiplexes a port in a same code division multiplexing CDM group by using a first frequency domain orthogonal cover code FD-OCC sequence, a length of the first FD-OCC sequence is greater than 2, the transmission channel includes a physical downlink shared channel PDSCH or a physical uplink shared channel PUSCH, a maximum number of data streams supported by the PDSCH is greater than 6, a maximum number of data streams supported by the PUSCH is greater than 4, and the DMRS port associated with the PTRS port is used for transmitting the PUSCH.

Optionally, the frequency domain resource offset includes at least one of the following:

a resource element RE offset; and
a resource block RB offset.

Optionally, RE offsets for the PTRS port corresponding to at least two first DMRS ports are different, and the at least two first DMRS ports belong to a same CDM group.

Optionally, the RE offsets for the PTRS port corresponding to the at least two first DMRS ports sequentially and incrementally correspond, based on an incrementing order of indexes of the at least two first DMRS ports, to subcarriers occupied by the at least two first DMRS ports.

Optionally, RE offsets for the PTRS port corresponding to part of first DMRS ports are the same, and the part of first DMRS ports belong to a same CDM group.

Optionally, a difference between port indexes of the part of first DMRS ports is N, and N is a positive integer.

Optionally, an RB offset for the PTRS port corresponding to a first port group is different from an RB offset for the PTRS port corresponding to a second port group;
or,

an RB offset for the PTRS port corresponding to a first port group is the same as an RB offset for the PTRS port corresponding to a second port group; where
the first port group and the second port group each include at least one first DMRS port.

Optionally, in a case that an RB offset for the PTRS port corresponding to the first port group is different from an RB offset for the PTRS port corresponding to the second port group, the RB offset for the PTRS port corresponding to the first port group and the RB offset for the PTRS port corresponding to the second port group are determined based on first RB offset signaling; or

a difference between the RB offset for the PTRS port corresponding to the first port group and the RB offset for the PTRS port corresponding to the second port group is determined based on a frequency domain density factor of the PTRS port; or
a difference between the RB offset for the PTRS port corresponding to the first port group and the RB offset for the PTRS port corresponding to the second port group is K, and K is a positive integer.

Optionally, the first RB offset signaling is used to separately indicate the RB offset for the PTRS port corresponding to the first port group and the RB offset for the PTRS port corresponding to the second port group;
or,
the first RB offset signaling is used to indicate the difference between the RB offset for the PTRS port corresponding to the first port group and the RB offset for the PTRS port corresponding to the second port group.

Optionally, the EPRE ratio of the PTRS port to the transmission channel includes one of the following:

a first EPRE ratio of the PTRS port to the PDSCH on each RE of each data stream; and
a second EPRE ratio of the PUSCH to the PTRS port on each RE of each data stream.

Optionally, in a case that a DMRS used for transmitting the PDSCH is the first DMRS, the first EPRE ratio is determined based on the number of data streams of the PDSCH, or the first EPRE ratio is 0 dB.

Optionally, in a case that a DMRS used for transmitting the PUSCH is the first DMRS or a second DMRS, the second EPRE ratio is determined based on at least one of the following parameters:

the number of data streams of the PUSCH;
antenna correlation capability information of the terminal; and
the number of PTRS ports; where
in a case that the DMRS used for transmitting the PUSCH is the first DMRS, the maximum number of data streams supported by the PUSCH is 8; and in a case that the DMRS used for transmitting the PUSCH is the second DMRS, the maximum number of data streams supported by the PUSCH is 6, where the second DMRS is a DMRS that multiplexes a port in a same CDM group by using a second FD-OCC sequence, and a length of the second FD-OCC sequence is equal to 2.

Optionally, in a case that a DMRS used for transmitting the PUSCH is the first DMRS or a second DMRS, second EPRE ratios corresponding to different PTRS ports are the same, or second EPRE ratios corresponding to different PTRS ports are different.

Optionally, in a case that one PTRS port is configured for the terminal, the DMRS port associated with the PTRS port is one of the first M scheduled DMRS ports, and a value of M is determined based on the number of data streams of the PUSCH;

or,

in a case that at least two PTRS ports are configured for the terminal, a DMRS port associated with each PTRS port of the at least two PTRS ports is one DMRS port of all DMRS ports sharing each PTRS port.

Optionally, in a case that the number of data streams of the PUSCH is less than or equal to 4, the value of M is the number of data streams of the PUSCH;

and/or

in a case that the number of data streams of the PUSCH is greater than 4, the value of M is 4.

Optionally, in a case that at least two PTRS ports are configured for the terminal, a DMRS port associated with each PTRS port of the at least two PTRS ports is one of the first two DMRS ports in all DMRS ports sharing each PTRS port.

Optionally, the DMRS port associated with the PTRS port is a DMRS port corresponding to a target codeword, and the target codeword is one codeword transmitted by the PUSCH.

Optionally, in a case that a codeword transmitted by the PUSCH is one codeword, the target codeword is the codeword transmitted by the PUSCH;

and/or

in a case that a codeword transmitted by the PUSCH includes two codewords, the target codeword is a codeword with a larger modulation and coding scheme MCS order in the two codewords transmitted by the PUSCH.

Optionally, the target codeword is the 1st codeword of the two codewords in a case that MCS orders of the two codewords are the same.

Optionally, in a case that one PTRS port is configured for the terminal, the DMRS port associated with the PTRS port is one of all scheduled DMRS ports corresponding to the target codeword;

and/or

in a case that at least two PTRS ports are configured for the terminal, the DMRS port associated with each PTRS port is one of all DMRS ports sharing each PTRS port corresponding to the target codeword.

Optionally, in a case that T PTRS ports are configured for the terminal, if DMRS ports associated with at least two of the T PTRS ports correspond to different codewords, a time domain density of the at least two PTRS ports is determined based on an MCS order of a first codeword, and the first codeword is a codeword with a largest or smallest MCS order in codewords corresponding to the DMRS ports associated with the at least two PTRS ports, where T is an integer greater than or equal to 2.

Optionally, a time domain density of a PTRS port corresponding to a retransmitted codeword is the same as a time domain density of a PTRS port corresponding to an initial transmitted codeword;

or,

a time domain density of a PTRS port corresponding to a retransmitted codeword is the same as a time domain density of a PTRS port corresponding to an MCS order of an initial transmitted codeword.

The phase tracking reference signal transmission apparatus in this embodiment of this application may be an electronic device, such as an electronic device with an operating system, or a component in the electronic device, such as an integrated circuit or a chip. The electronic device may be a terminal or other devices than the terminal. For example, the terminal may include, but is not limited to, the types of the terminal 11 listed above, and other devices may be a server, a network attached storage (Network Attached Storage, NAS), and the like. This is not limited in the embodiments of this application.

The phase tracking reference signal transmission apparatus provided in this embodiment of this application can implement the processes implemented in the method embodiments in FIG. 2, with the same technical effects achieved. To avoid repetition, details are not described herein again.

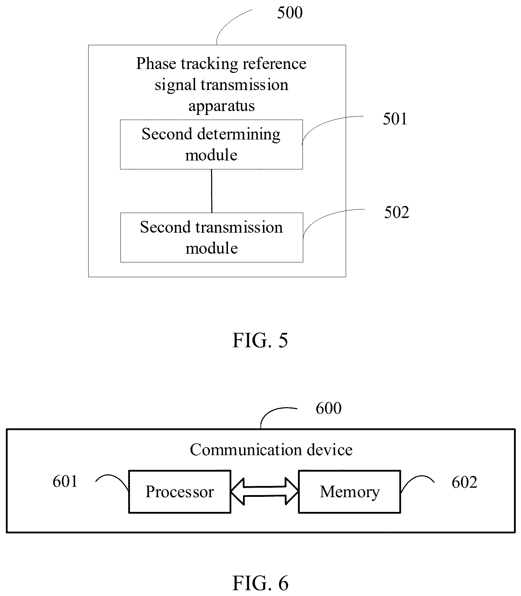

Refer to FIG. 5. FIG. 5 is a structural diagram of a phase tracking reference signal transmission apparatus according to an embodiment of this application. As shown in FIG. 5, the phase tracking reference signal transmission apparatus 500 includes:

a second determining module 501, configured to determine a transmission parameter for a phase tracking reference signal PTRS; and
a second transmission module 502, configured to receive the PTRS based on the transmission parameter, or send the PTRS based on the transmission parameter; where
the PTRS includes at least one PTRS port, and the transmission parameter includes at least one of the following: a frequency domain resource offset for the PTRS port corresponding to a first demodulation reference signal DMRS port, an energy per resource element EPRE ratio of the PTRS port to a transmission channel, and a DMRS port associated with the PTRS port; and

the first DMRS is a DMRS that multiplexes a port in a same code division multiplexing CDM group by using a first frequency domain orthogonal cover code FD-OCC sequence, a length of the first FD-OCC sequence is greater than 2, the transmission channel includes a physical downlink shared channel PDSCH or a physical uplink shared channel PUSCH, a maximum number of data streams supported by the PDSCH is greater than 6, a maximum number of data streams supported by the PUSCH is greater than 4, and the DMRS port associated with the PTRS port is used for transmitting the PUSCH.

Optionally, the frequency domain resource offset includes at least one of the following:

a resource element RE offset; and
a resource block RB offset.

Optionally, RE offsets for the PTRS port corresponding to at least two first DMRS ports are different, and the at least two first DMRS ports belong to a same CDM group.

Optionally, the RE offsets for the PTRS port corresponding to the at least two first DMRS ports sequentially and incrementally correspond, based on an incrementing order of indexes of the at least two first DMRS ports, to subcarriers occupied by the at least two first DMRS ports.

Optionally, RE offsets for the PTRS port corresponding to part of first DMRS ports are the same, and the part of first DMRS ports belong to a same CDM group.

Optionally, a difference between port indexes of the part of first DMRS ports is N, and N is a positive integer.

Optionally, an RB offset for the PTRS port corresponding to a first port group is different from an RB offset for the PTRS port corresponding to a second port group;

or,

an RB offset for the PTRS port corresponding to a first port group is the same as an RB offset for the PTRS port corresponding to a second port group; where

the first port group and the second port group each include at least one first DMRS port.

Optionally, in a case that an RB offset for the PTRS port corresponding to the first port group is different from an RB offset for the PTRS port corresponding to the second port group, the RB offset for the PTRS port corresponding to the first port group and the RB offset for the PTRS port corresponding to the second port group are determined based on first RB offset signaling; or

a difference between the RB offset for the PTRS port corresponding to the first port group and the RB offset for the PTRS port corresponding to the second port group is determined based on a frequency domain density factor of the PTRS port; or

a difference between the RB offset for the PTRS port corresponding to the first port group and the RB offset for the PTRS port corresponding to the second port group is K, and K is a positive integer.

Optionally, the first RB offset signaling is used to separately indicate the RB offset for the PTRS port corresponding to the first port group and the RB offset for the PTRS port corresponding to the second port group;

or,

the first RB offset signaling is used to indicate the difference between the RB offset for the PTRS port corresponding to the first port group and the RB offset for the PTRS port corresponding to the second port group.

Optionally, the EPRE ratio of the PTRS port to the transmission channel includes one of the following:

a first EPRE ratio of the PTRS port to the PDSCH on each RE of each data stream; and
a second EPRE ratio of the PUSCH to the PTRS port on each RE of each data stream.

Optionally, in a case that a DMRS used for transmitting the PDSCH is the first DMRS, the first EPRE ratio is determined based on the number of data streams of the PDSCH, or the first EPRE ratio is 0 dB.

Optionally, in a case that a DMRS used for transmitting the PUSCH is the first DMRS or a second DMRS, the second EPRE ratio is determined based on at least one of the following parameters:

the number of data streams of the PUSCH;
antenna correlation capability information of the terminal; and
the number of PTRS ports; where
in a case that the DMRS used for transmitting the PUSCH is the first DMRS, the maximum number of data streams supported by the PUSCH is 8; and in a case that the DMRS used for transmitting the PUSCH is the second DMRS, the maximum number of data streams supported by the PUSCH is 6, where the second DMRS is a DMRS that multiplexes a port in a same CDM group by using a second FD-OCC sequence, and a length of the second FD-OCC sequence is equal to 2.

Optionally, in a case that a DMRS used for transmitting the PUSCH is the first DMRS or a second DMRS, second EPRE ratios corresponding to different PTRS ports are the same, or second EPRE ratios corresponding to different PTRS ports are different.

Optionally, in a case that one PTRS port is configured for the terminal, the DMRS port associated with the PTRS port is one of the first M scheduled DMRS ports, and a value of M is determined based on the number of data streams of the PUSCH;

or,

in a case that at least two PTRS ports are configured for the terminal, a DMRS port associated with each PTRS port of the at least two PTRS ports is one DMRS port of all DMRS ports sharing each PTRS port.

Optionally, in a case that the number of data streams of the PUSCH is less than or equal to 4, the value of M is the number of data streams of the PUSCH;

and/or

in a case that the number of data streams of the PUSCH is greater than 4, the value of M is 4.

Optionally, in a case that at least two PTRS ports are configured for the terminal, a DMRS port associated with each PTRS port of the at least two PTRS ports is one of the first two DMRS ports in all DMRS ports sharing each PTRS port.

Optionally, the DMRS port associated with the PTRS port is a DMRS port corresponding to a target codeword, and the target codeword is one codeword transmitted by the PUSCH.

Optionally, in a case that a codeword transmitted by the PUSCH is one codeword, the target codeword is the codeword transmitted by the PUSCH;

and/or

in a case that a codeword transmitted by the PUSCH includes two codewords, the target codeword is a codeword with a larger modulation and coding scheme MCS order in the two codewords transmitted by the PUSCH.

Optionally, the target codeword is the 1st codeword of the two codewords in a case that MCS orders of the two codewords are the same.

Optionally, in a case that one PTRS port is configured for the terminal, the DMRS port associated with the PTRS port is one of all scheduled DMRS ports corresponding to the target codeword;

and/or

in a case that at least two PTRS ports are configured for the terminal, the DMRS port associated with each PTRS port is one of all DMRS ports sharing each PTRS port corresponding to the target codeword.

Optionally, in a case that T PTRS ports are configured for the terminal, if DMRS ports associated with at least two of the T PTRS ports correspond to different codewords, a time domain density of the at least two PTRS ports is determined based on an MCS order of a first codeword, and the first codeword is a codeword with a largest or smallest MCS order in codewords corresponding to the DMRS ports associated with the at least two PTRS ports, where T is an integer greater than or equal to 2.

Optionally, a time domain density of a PTRS port corresponding to a retransmitted codeword is the same as a time domain density of a PTRS port corresponding to an initial transmitted codeword;

or,

a time domain density of a PTRS port corresponding to a retransmitted codeword is the same as a time domain density of a PTRS port corresponding to an MCS order of an initial transmitted codeword.

The phase tracking reference signal transmission apparatus in this embodiment of this application may be an electronic device, such as an electronic device with an operating system, or a component in the electronic device, such as an integrated circuit or a chip. The electronic device may be a network-side device or other devices than the network-side device. For example, the network-side device may include, but is not limited to, the types of the network-side device 12 listed above, and other devices may be a server, a network attached storage (Network Attached Storage, NAS), and the like. This is not limited in the embodiments of this application.

The phase tracking reference signal transmission apparatus provided in this embodiment of this application can implement the processes implemented in the method embodiments in FIG. 3, with the same technical effects achieved. To avoid repetition, details are not described herein again.

Optionally, as shown in FIG. 6, an embodiment of this application further provides a communication device 600, including a processor 601 and a memory 602. A program or an instruction capable of running on the processor 601 are stored in the memory 602. For example, when the communication device 600 is a terminal and when the program or the instructions is executed by the processor 601, the steps of the foregoing embodiments of the phase tracking reference signal transmission method are implemented, with the same technical effects achieved When the communication device 600 is a network-side device and when the program or the instructions is executed by the processor 601, the steps of the foregoing embodiments of the phase tracking reference signal transmission method are implemented, with the same technical effects achieved. To avoid repetition, details are not described herein again.

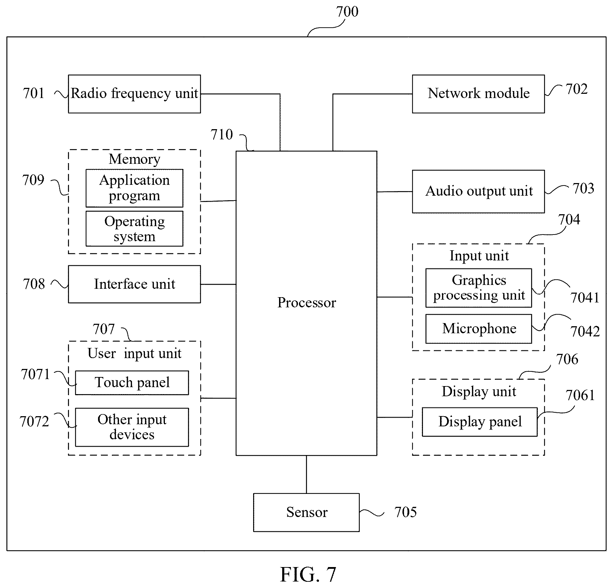

An embodiment of this application further provides a terminal, including a processor and a communication interface, where the processor is configured to determine a transmission parameter for a phase tracking reference signal PTRS; and the communication interface is configured to send the PTRS based on the transmission parameter, or receive the PTRS based on the transmission parameter; where the PTRS includes at least one PTRS port, and the transmission parameter includes at least one of the following: a frequency domain resource offset for the PTRS port corresponding to a first demodulation reference signal DMRS port, an energy per resource element EPRE ratio of the PTRS port to a transmission channel, and a DMRS port associated with the PTRS port; and the first DMRS is a DMRS that multiplexes a port in a same code division multiplexing CDM group by using a first frequency domain orthogonal cover code FD-OCC sequence, a length of the first FD-OCC sequence is greater than 2, the transmission channel includes a physical downlink shared channel PDSCH or a physical uplink shared channel PUSCH, a maximum number of data streams supported by the PDSCH is greater than 6, a maximum number of data streams supported by the PUSCH is greater than 4, and the DMRS port associated with the PTRS port is used for transmitting the PUSCH. The terminal embodiment corresponds to the foregoing terminal side method embodiment, and the implementation processes and implementations of the foregoing method embodiments can be applied to the terminal embodiments, with the same technical effects achieved. Specifically, FIG. 7 is a schematic diagram of a hardware structure of a terminal implementing an embodiment of this application.

The terminal 700 includes but is not limited to at least part of components such as a radio frequency unit 701, a network module 702, an audio output unit 703, an input unit 704, a sensor 705, a display unit 706, a user input unit 707, an interface unit 708, a memory 709, and a processor 710.

Persons skilled in the art can understand that the terminal 700 may further include a power supply (for example, a battery) supplying power to the components, and the power supply may be logically connected to the processor 710 through a power management system. In this way, functions such as charge management, discharge management, and power consumption management are implemented by using the power management system. The structure of the terminal shown in FIG. 7 does not constitute any limitation on the terminal. The terminal may include more or fewer components than shown in the figure, or a combination of some components, or the components disposed differently. Details are not described herein again.

It can be understood that in this embodiment of this application, the input unit 704 may include a graphics processing unit (Graphics Processing Unit, GPU) 7041 and a microphone 7042. The graphics processing unit 7041 processes image data of a still picture or video obtained by an image capture apparatus (such as a camera) in a video capture mode or an image capture mode. The display unit 706 may include a display panel 7061, and the display panel 7061 may be configured in a form of a liquid crystal display, an organic light-emitting diode, and the like. The user input unit 707 includes at least one of a touch panel 7071 and other input devices 7072. The touch panel 7071 is also referred to as a touchscreen. The touch panel 7071 may include two parts: a touch detection apparatus and a touch controller. The other input devices 7072 may include but be not limited to a physical keyboard, a function key (such as a volume control key or an on/off key), a trackball, a mouse, and a joystick. Details are not described herein.

In this embodiment of this application, after receiving downlink data from a network-side device, the radio frequency unit 701 sends the downlink data to the processor 710 for processing; and the radio frequency unit 701 also sends uplink data to the network-side device. Generally, the radio frequency unit 701 includes, but is not limited to, an antenna, an amplifier, a transceiver, a coupler, a low noise amplifier, a duplexer, and the like.

The memory 709 may be configured to store software programs or instructions and various data. The memory 709 may mainly include a first storage area for storing programs or instructions and a second storage area for storing data, where the first storage area may store an operating system, an application program or an instruction required by at least one function (for example, an audio playing function and an image playing function), and the like. In addition, the memory 709 may be a volatile memory or a non-volatile memory, or the memory 709 may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct memory bus random access memory (Direct Rambus RAM, DRRAM). The memory 709 described in this embodiment this application includes but is not limited to these and any other appropriate types of memories.

The processor 710 may include one or more processing units. Optionally, the processor 710 integrates an application processor and a modem processor. The application processor mainly processes operations related to an operating system, a user interface, an application program, and the like. The modem processor mainly processes wireless communication signals, for example, a baseband processor. It can be understood that the modem processor may alternatively be not integrated in the processor 710.

The processor 710 is configured to determine a transmission parameter for a phase tracking reference signal PTRS.

The radio frequency unit 701 is configured to send the PTRS based on the transmission parameter, or receive the PTRS based on the transmission parameter; where the PTRS includes at least one PTRS port, and the transmission parameter includes at least one of the following: a frequency domain resource offset for the PTRS port corresponding to a first demodulation reference signal DMRS port, an energy per resource element EPRE ratio of the PTRS port to a transmission channel, and a DMRS port associated with the PTRS port; and the first DMRS is a DMRS that multiplexes a port in a same code division multiplexing CDM group by using a first frequency domain orthogonal cover code FD-OCC sequence, a length of the first FD-OCC sequence is greater than 2, the transmission channel includes a physical downlink shared channel PDSCH or a physical uplink shared channel PUSCH, a maximum number of data streams supported by the PDSCH is greater than 6, a maximum number of data streams supported by the PUSCH is greater than 4, and the DMRS port associated with the PTRS port is used for transmitting the PUSCH.

It should be understood that this terminal embodiment can implement the processes implemented by the foregoing terminal-side method embodiment, with the same technical effects achieved. To avoid repetition, details are not described herein again.

An embodiment of this application further provides a network-side device, including a processor and a communication interface, where the processor is configured to determine a transmission parameter for a phase tracking reference signal PTRS; and the communication interface is configured to send the PTRS based on the transmission parameter, or receive the PTRS based on the transmission parameter; where the PTRS includes at least one PTRS port, and the transmission parameter includes at least one of the following: a frequency domain resource offset for the PTRS port corresponding to a first demodulation reference signal DMRS port, an energy per resource element EPRE ratio of the PTRS port to a transmission channel, and a DMRS port associated with the PTRS port; and the first DMRS is a DMRS that multiplexes a port in a same code division multiplexing CDM group by using a first frequency domain orthogonal cover code FD-OCC sequence, a length of the first FD-OCC sequence is greater than 2, the transmission channel includes a physical downlink shared channel PDSCH or a physical uplink shared channel PUSCH, a maximum number of data streams supported by the PDSCH is greater than 6, a maximum number of data streams supported by the PUSCH is greater than 4, and the DMRS port associated with the PTRS port is used for transmitting the PUSCH. The network-side device embodiment corresponds to the foregoing network-side device method embodiment, and the implementation processes and implementations of the foregoing method embodiments can be applied to the network-side device embodiments, with the same technical effects achieved.

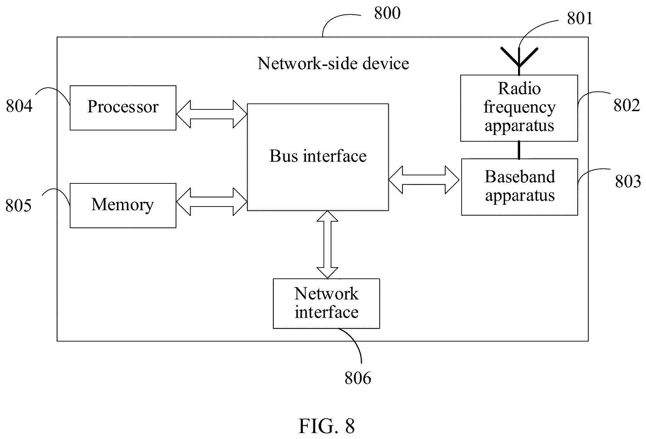

Specifically, an embodiment of this application further provides a network-side device. As shown in FIG. 8, the network-side device 800 includes an antenna 801, a radio frequency apparatus 802, a baseband apparatus 803, a processor 804, and a memory 805. The antenna 801 is connected to the radio frequency apparatus 802. In an uplink direction, the radio frequency apparatus 802 receives information by using the antenna 801, and sends the received information to the baseband apparatus 803 for processing. In a downlink direction, the baseband apparatus 803 processes to-be-sent information, and sends the information to the radio frequency apparatus 802; and the radio frequency apparatus 802 processes the received information and then sends the information out by using the antenna 801.

The method performed by the network-side device in the foregoing embodiment may be implemented in the baseband apparatus 803, and the baseband apparatus 803 includes a baseband processor.

The baseband apparatus 803 may include, for example, at least one baseband processing unit, where a plurality of chips are disposed on the baseband processing unit. As shown in FIG. 8, one of the chips is, for example, the baseband processor, and connected to the memory 805 through a bus interface, to invoke the program in the memory 805 to perform the operations of the network device shown in the foregoing method embodiment.

The network-side device may further include a network interface 806, where the interface is, for example, a common public radio interface (common public radio interface, CPRI).

Specifically, the network-side device 800 according to this embodiment of the present invention further includes instructions or programs stored in the memory 805 and capable of running on the processor 804, and the processor 804 calls the instructions or programs in the memory 805 to execute the methods performed by the modules shown in FIG. 5, with the same technical effects achieved. To avoid repetition, details are not described herein again.

An embodiment of this application further provides a readable storage medium, where a program or an instruction is stored in the readable storage medium. When the program or the instruction is executed by a processor, the processes of the foregoing embodiment of the phase tracking reference signal transmission method can be implemented, with the same technical effects achieved. To avoid repetition, details are not described herein again.

The processor is a processor in the terminal described in the foregoing embodiments. The readable storage medium includes a computer-readable storage medium, for example, a computer read only memory ROM, a random access memory RAM, a magnetic disk, or an optical disc.

An embodiment of this application further provides a chip, where the chip includes a processor and a communication interface, the communication interface is coupled to the processor, and the processor is configured to run a program or an instruction to implement the processes of the foregoing embodiments of the phase tracking reference signal transmission method, with the same technical effects achieved. To avoid repetition, details are not repeated herein.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a storage medium, and when being executed by at least one processor, the computer program/program product is configured to implement the processes of the foregoing embodiments of the phase tracking reference signal transmission method, with the same technical effects achieved. To avoid repetition, details are not repeated herein.

An embodiment of this application further provides a phase tracking reference signal transmission system, including a terminal and a network-side device. The terminal is configured to execute the processes shown in FIG. 2 and the foregoing method embodiments, and the network-side device is configured to execute the processes shown in FIG. 3 and the foregoing method embodiments, with the same technical effects achieved. To avoid repetition, details are not repeated herein.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiment may be implemented by software with a necessary general hardware platform. Certainly, the method in the foregoing embodiment may also be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

**Claims**

1. A phase tracking reference signal PTRS transmission method, comprising:

   determining, by a terminal, a transmission parameter for a PTRS; and
   sending, by the terminal, the PTRS based on the transmission parameter, or receiving, by the terminal, the PTRS based on the transmission parameter; wherein
   the PTRS comprises at least one PTRS port, and the transmission parameter comprises at least one of the following: a frequency domain resource offset for the PTRS port corresponding to a first demodulation reference signal DMRS port, an energy per resource element EPRE ratio of the PTRS port to a transmission channel, and a DMRS port associated with the PTRS port; and
   the first DMRS is a DMRS that multiplexes a port in a same code division multiplexing CDM group by using a first frequency domain orthogonal cover code FD-OCC sequence, a length of the first FD-OCC sequence is greater than 2, the transmission channel comprises a physical downlink shared channel PDSCH or a physical uplink shared channel PUSCH, a maximum number of data streams supported by the PDSCH is greater than 6, a maximum number of data streams supported by the PUSCH is greater than 4, and the DMRS port associated with the PTRS port is used for transmitting the PUSCH.

2. The method according to claim 1, wherein the frequency domain resource offset comprises at least one of the following:

   a resource element RE offset; and
   a resource block RB offset.

3. The method according to claim 2, wherein RE offsets for the PTRS port corresponding to at least two first DMRS ports are different, and the at least two first DMRS ports belong to a same CDM group.

4. The method according to claim 3, wherein the RE offsets for the PTRS port corresponding to the at least two first DMRS ports sequentially and incrementally correspond, based on an incrementing order of indexes of the at least two first DMRS ports, to subcarriers occupied by the at least two first DMRS ports.

5. The method according to claim 2, wherein RE offsets for the PTRS port corresponding to part of first DMRS ports are the same, and the part of first DMRS ports belong to a same CDM group.

6. The method according to claim 5, wherein a difference between port indexes of the part of first DMRS ports is N, and N is a positive integer.

7. The method according to claim 2, wherein an RB offset for the PTRS port corresponding to a first port group is different from an RB offset for the PTRS port corresponding to a second port group;
   or,

   an RB offset for the PTRS port corresponding to a first port group is the same as an RB offset for the PTRS port corresponding to a second port group; wherein
   the first port group and the second port group each comprise at least one first DMRS port.

8. The method according to claim 7, wherein in a case that an RB offset for the PTRS port corresponding to the first port group is different from an RB offset for the PTRS port corresponding to the second port group, the RB offset for the PTRS port corresponding to the first port group and the RB offset for the PTRS port corresponding to the second port group are determined based on first RB offset signaling; or

   a difference between the RB offset for the PTRS port corresponding to the first port group and the RB offset for the PTRS port corresponding to the second port group is determined based on a frequency domain density factor of the PTRS port; or
   a difference between the RB offset for the PTRS port corresponding to the first port group and the RB offset for the PTRS port corresponding to the second port group is K, and K is a positive integer.

9. The method according to claim 8, wherein the first RB offset signaling is used to separately indicate the RB offset for the PTRS port corresponding to the first port group and the RB offset for the PTRS port corresponding to the second port group;
   or,
   the first RB offset signaling is used to indicate the difference between the RB offset for the PTRS port corresponding to the first port group and the RB offset for the PTRS port corresponding to the second port group.

10. The method according to any one of claims 1 to 9, wherein the EPRE ratio of the PTRS port to the transmission channel comprises one of the following:

    a first EPRE ratio of the PTRS port to the PDSCH on each RE of each data stream; and
    a second EPRE ratio of the PUSCH to the PTRS port on each RE of each data stream.

11. The method according to claim 10, wherein in a case that a DMRS used for transmitting the PDSCH is the first DMRS, the first EPRE ratio is determined based on the number of data streams of the PDSCH, or the first EPRE ratio is 0 dB.

12. The method according to claim 10, wherein in a case that a DMRS used for transmitting the PUSCH is the first DMRS or a second DMRS, the second EPRE ratio is determined based on at least one of the following parameters:

    the number of data streams of the PUSCH;
    antenna correlation capability information of the terminal; and
    the number of PTRS ports; wherein
    in a case that the DMRS used for transmitting the PUSCH is the first DMRS, the maximum number of data streams supported by the PUSCH is 8; and in a case that the DMRS used for transmitting the PUSCH is the second DMRS, the maximum number of data streams supported by the PUSCH is 6, wherein the second DMRS is a DMRS that multiplexes a port in a same CDM group by using a second FD-OCC sequence, and a length of the second FD-OCC sequence is equal to 2.

13. The method according to claim 12, wherein in a case that a DMRS used for transmitting the PUSCH is the first DMRS or the second DMRS, second EPRE ratios corresponding to different PTRS ports are the same, or second EPRE ratios corresponding to different PTRS ports are different.

14. The method according to any one of claims 1 to 9, wherein in a case that one PTRS port is configured for the terminal, the DMRS port associated with the PTRS port is one of the first M scheduled DMRS ports, and a value of M is determined based on the number of data streams of the PUSCH;
    or,
    in a case that at least two PTRS ports are configured for the terminal, the DMRS port associated with each PTRS port of the at least two PTRS ports is one DMRS port of all DMRS ports sharing each PTRS port.

15. The method according to claim 14, wherein in a case that the number of data streams of the PUSCH is less than or equal to 4, the value of M is the number of data streams of the PUSCH;
    and/or
    in a case that the number of data streams of the PUSCH is greater than 4, the value of M is 4.

16. The method according to claim 14, wherein a DMRS port associated with each PTRS port of the at least two PTRS ports is one of the first two DMRS ports of all DMRS ports sharing each PTRS port.

17. The method according to any one of claims 1 to 9, wherein the DMRS port associated with the PTRS port is a DMRS port corresponding to a target codeword, and the target codeword is one codeword transmitted by the PUSCH.

18. The method according to claim 17, wherein in a case that a codeword transmitted by the PUSCH is one codeword, the target codeword is the codeword transmitted by the PUSCH;
    and/or
    in a case that a codeword transmitted by the PUSCH comprises two codewords, the target codeword is a codeword with a larger modulation and coding scheme MCS order of the two codewords transmitted by the PUSCH.

19. The method according to claim 18, wherein the target codeword is the 1st codeword of the two codewords in a case that MCS orders of the two codewords are the same.

20. The method according to claim 17, wherein in a case that one PTRS port is configured for the terminal, the DMRS port associated with the PTRS port is one of all scheduled DMRS ports corresponding to the target codeword;
    and/or
    in a case that at least two PTRS ports are configured for the terminal, the DMRS port associated with each PTRS port is one of all DMRS ports sharing each PTRS port, corresponding to the target codeword.

21. The method according to any one of claims 1 to 20, wherein in a case that T PTRS ports are configured for the terminal, if DMRS ports associated with at least two of the T PTRS ports correspond to different codewords, a time domain density of the at least two PTRS ports is determined based on an MCS order of a first codeword, and the first codeword is a codeword with a largest or smallest MCS order of codewords corresponding to the DMRS ports associated with the at least two PTRS ports, wherein T is an integer greater than or equal to 2.

22. The method according to any one of claims 1 to 21, wherein a time domain density of a PTRS port corresponding to a retransmitted codeword is the same as a time domain density of a PTRS port corresponding to an initial transmitted codeword;

or,

a time domain density of a PTRS port corresponding to a retransmitted codeword is the same as a time domain density of a PTRS port corresponding to an MCS order of an initial transmitted codeword.

23. A phase tracking reference signal transmission method, comprising:

determining, by a network-side device, a transmission parameter for a phase tracking reference signal PTRS; and receiving, by the network-side device, the PTRS based on the transmission parameter, or sending, by the network-side device, the PTRS based on the transmission parameter; wherein the PTRS comprises at least one PTRS port, and the transmission parameter comprises at least one of the following: a frequency domain resource offset for the PTRS port corresponding to a first demodulation reference signal DMRS port, an energy per resource element EPRE ratio of the PTRS port to a transmission channel, and a DMRS port associated with the PTRS port; and the first DMRS is a DMRS that multiplexes a port in a same code division multiplexing CDM group by using a first frequency domain orthogonal cover code FD-OCC sequence, a length of the first FD-OCC sequence is greater than 2, the transmission channel comprises a physical downlink shared channel PDSCH or a physical uplink shared channel PUSCH, a maximum number of data streams supported by the PDSCH is greater than 6, a maximum number of data streams supported by the PUSCH is greater than 4, and the DMRS port associated with the PTRS port is used for transmitting the PUSCH.

24. The method according to claim 23, wherein the frequency domain resource offset comprises at least one of the following:

a resource element RE offset; and
a resource block RB offset.

25. The method according to claim 24, wherein RE offsets for the PTRS port corresponding to at least two first DMRS ports are different, and the at least two first DMRS ports belong to a same CDM group.

26. The method according to claim 25, wherein the RE offsets for the PTRS port corresponding to the at least two first DMRS ports sequentially and incrementally correspond, based on an incrementing order of indexes of the at least two first DMRS ports, to subcarriers occupied by the at least two first DMRS ports.

27. The method according to claim 24, wherein RE offsets for the PTRS port corresponding to part of first DMRS ports are the same, and the part of first DMRS ports belong to a same CDM group.

28. The method according to claim 27, wherein a difference between port indexes of the part of first DMRS ports is N, and N is a positive integer.

29. The method according to claim 24, wherein an RB offset for the PTRS port corresponding to a first port group is different from an RB offset for the PTRS port corresponding to a second port group;
or,

an RB offset for the PTRS port corresponding to a first port group is the same as an RB offset for the PTRS port corresponding to a second port group; wherein
the first port group and the second port group each comprise at least one first DMRS port.

30. The method according to claim 29, wherein in a case that an RB offset for the PTRS port corresponding to the first port group is different from an RB offset for the PTRS port corresponding to the second port group, the RB offset for the PTRS port corresponding to the first port group and the RB offset for the PTRS port corresponding to the second port group are determined based on first RB offset signaling; or

a difference between the RB offset for the PTRS port corresponding to the first port group and the RB offset for the PTRS port corresponding to the second port group is determined based on a frequency domain density factor of the PTRS port; or
a difference between the RB offset for the PTRS port corresponding to the first port group and the RB offset for the PTRS port corresponding to the second port group is K, and K is a positive integer.

**31.** The method according to claim 30, wherein the first RB offset signaling is used to separately indicate the RB offset for the PTRS port corresponding to the first port group and the RB offset for the PTRS port corresponding to the second port group;
or,
the first RB offset signaling is used to indicate the difference between the RB offset for the PTRS port corresponding to the first port group and the RB offset for the PTRS port corresponding to the second port group.

**32.** The method according to any one of claims 23 to 31, wherein the EPRE ratio of the PTRS port to the transmission channel comprises one of the following:

a first EPRE ratio of the PTRS port to the PDSCH on each RE of each data stream; and
a second EPRE ratio of the PUSCH to the PTRS port on each RE of each data stream.

**33.** The method according to claim 32, wherein in a case that a DMRS used for transmitting the PDSCH is the first DMRS, the first EPRE ratio is determined based on the number of data streams of the PDSCH, or the first EPRE ratio is 0 dB.

**34.** The method according to claim 32, wherein in a case that a DMRS used for transmitting the PUSCH is the first DMRS or a second DMRS, the second EPRE ratio is determined based on at least one of the following parameters:

the number of data streams of the PUSCH;
antenna correlation capability information of a terminal; and
the number of PTRS ports; wherein
in a case that the DMRS used for transmitting the PUSCH is the first DMRS, the maximum number of data streams supported by the PUSCH is 8; and in a case that the DMRS used for transmitting the PUSCH is the second DMRS, the maximum number of data streams supported by the PUSCH is 6, wherein the second DMRS is a DMRS that multiplexes a port in a same CDM group by using a second FD-OCC sequence, and a length of the second FD-OCC sequence is equal to 2.

**35.** The method according to claim 34, wherein in a case that a DMRS used for transmitting the PUSCH is the first DMRS or a second DMRS, second EPRE ratios corresponding to different PTRS ports are the same, or second EPRE ratios corresponding to different PTRS ports are different.

**36.** The method according to any one of claims 23 to 31, wherein in a case that one PTRS port is configured for the terminal, the DMRS port associated with the PTRS port is one of the first M scheduled DMRS ports, and a value of M is determined based on the number of data streams of the PUSCH;
or,
in a case that at least two PTRS ports are configured for the terminal, a DMRS port associated with each PTRS port of the at least two PTRS ports is one DMRS port of all DMRS ports sharing each PTRS port.

**37.** The method according to claim 36, wherein in a case that the number of data streams of the PUSCH is less than or equal to 4, the value of M is the number of data streams of the PUSCH;
and/or
in a case that the number of data streams of the PUSCH is greater than 4, the value of M is 4.

**38.** The method according to claim 36, wherein in a case that at least two PTRS ports are configured for the terminal, a DMRS port associated with each PTRS port of the at least two PTRS ports is one of the first two DMRS ports in all DMRS ports sharing each PTRS port.

**39.** The method according to any one of claims 23 to 31, wherein the DMRS port associated with the PTRS port is a DMRS port corresponding to a target codeword, and the target codeword is one codeword transmitted by the PUSCH.

**40.** The method according to claim 39, wherein in a case that a codeword transmitted by the PUSCH is one codeword, the target codeword is the codeword transmitted by the PUSCH;
and/or
in a case that a codeword transmitted by the PUSCH comprises two codewords, the target codeword is a codeword with a larger modulation and coding scheme MCS order in the two codewords transmitted by the PUSCH.

**41.** The method according to claim 40, wherein the target codeword is the 1st codeword of the two codewords in a case that MCS orders of the two codewords are the same.

42. The method according to claim 39, wherein in a case that one PTRS port is configured for the terminal, the DMRS port associated with the PTRS port is one of all scheduled DMRS ports corresponding to the target codeword; and/or
in a case that at least two PTRS ports are configured for the terminal, the DMRS port associated with each PTRS port is one of all DMRS ports sharing each PTRS port, corresponding to the target codeword.

43. The method according to any one of claims 23 to 42, wherein in a case that T PTRS ports are configured for the terminal, if DMRS ports associated with at least two of the T PTRS ports correspond to different codewords, a time domain density of the at least two PTRS ports is determined based on an MCS order of a first codeword, and the first codeword is a codeword with a largest or smallest MCS order in codewords corresponding to the DMRS ports associated with the at least two PTRS ports, wherein T is an integer greater than or equal to 2.

44. The method according to any one of claims 23 to 43, wherein a time domain density of a PTRS port corresponding to a retransmitted codeword is the same as a time domain density of a PTRS port corresponding to an initial transmitted codeword;
or,
a time domain density of a PTRS port corresponding to a retransmitted codeword is the same as a time domain density of a PTRS port corresponding to an MCS order of an initial transmitted codeword.

45. A phase tracking reference signal transmission apparatus, comprising:

a first determining module, configured to determine a transmission parameter for a phase tracking reference signal PTRS; and
a first transmission module, configured to send the PTRS based on the transmission parameter, or receive, for the terminal, the PTRS based on the transmission parameter; wherein
the PTRS comprises at least one PTRS port, and the transmission parameter comprises at least one of the following: a frequency domain resource offset for the PTRS port corresponding to a first demodulation reference signal DMRS port, an energy per resource element EPRE ratio of the PTRS port to a transmission channel, and a DMRS port associated with the PTRS port; and
the first DMRS is a DMRS that multiplexes a port in a same code division multiplexing CDM group by using a first frequency domain orthogonal cover code FD-OCC sequence, a length of the first FD-OCC sequence is greater than 2, the transmission channel comprises a physical downlink shared channel PDSCH or a physical uplink shared channel PUSCH, a maximum number of data streams supported by the PDSCH is greater than 6, a maximum number of data streams supported by the PUSCH is greater than 4, and the DMRS port associated with the PTRS port is used for transmitting the PUSCH.

46. A phase tracking reference signal transmission apparatus, comprising:

a second determining module, configured to determine a transmission parameter for a phase tracking reference signal PTRS; and
a second transmission module, configured to receive the PTRS based on the transmission parameter, or send the PTRS based on the transmission parameter; wherein
the PTRS comprises at least one PTRS port, and the transmission parameter comprises at least one of the following: a frequency domain resource offset for the PTRS port corresponding to a first demodulation reference signal DMRS port, an energy per resource element EPRE ratio of the PTRS port to a transmission channel, and a DMRS port associated with the PTRS port; and
the first DMRS is a DMRS that multiplexes a port in a same code division multiplexing CDM group by using a first frequency domain orthogonal cover code FD-OCC sequence, a length of the first FD-OCC sequence is greater than 2, the transmission channel comprises a physical downlink shared channel PDSCH or a physical uplink shared channel PUSCH, a maximum number of data streams supported by the PDSCH is greater than 6, a maximum number of data streams supported by the PUSCH is greater than 4, and the DMRS port associated with the PTRS port is used for transmitting the PUSCH.

47. A terminal, comprising a processor and a memory, wherein the memory stores a program or an instruction capable of running on the processor, and when the program or an instruction is executed by the processor, the steps of the phase tracking reference signal transmission method according to any one of claims 1 to 22 are implemented.

**48.** A network-side device, comprising a processor and a memory, wherein the memory stores a program or an instruction capable of running on the processor, and when the program or an instruction is executed by the processor, the steps of the phase tracking reference signal transmission method according to any one of claims 23 to 44 are implemented.

**49.** A readable storage medium, wherein the readable storage medium stores a program or an instruction, and when the program or an instruction are executed by a processor, the steps of the phase tracking reference signal transmission method according to any one of claims 1 to 22 are implemented, or the steps of the phase tracking reference signal transmission method according to any one of claims 23 to 44 are implemented.

12

Network-side
device

11

Terminal

11

Terminal

FIG. 1

| A terminal determines a transmission parameter for a PTRS | 201 |

| The terminal sends the PTRS based on the transmission parameter, or the terminal receives the PTRS based on the transmission parameter | 202 |

FIG. 2

A network-side device determines a transmission parameter of a PTRS ⌐ 301

The network-side device receives the PTRS based on the transmission parameter, or the network-side device sends the PTRS based on the transmission parameter ⌐ 302

FIG. 3

400

Phase tracking reference signal transmission apparatus

First determining module ⌐ 401

First transmission module ⌐ 402

FIG. 4

500

Phase tracking reference
signal transmission
apparatus

Second determining
module — 501

Second transmission
module — 502

FIG. 5

600

Communication device

601 — Processor ⟺ Memory — 602

FIG. 6

700

701 — Radio frequency unit

Network module — 702

710 —

Memory

709 — Application program

Operating system

Audio output unit — 703

704

Input unit

Graphics processing unit — 7041

Microphone — 7042

708 — Interface unit

Processor

706

707 —

User input unit

7071 — Touch panel

7072 — Other input devices

Display unit

7061

Display panel

Sensor — 705

FIG. 7

FIG. 8

## INTERNATIONAL SEARCH REPORT

| International application No. |
| --- |
| **PCT/CN2024/071766** |

| A. | CLASSIFICATION OF SUBJECT MATTER |
| --- | --- |

H04W 72/12(2023.01)i

According to International Patent Classification (IPC) or to both national classification and IPC

| B. | FIELDS SEARCHED |
| --- | --- |

Minimum documentation searched (classification system followed by classification symbols)

IPC: H04W H04Q H04L

Documentation searched other than minimum documentation to the extent that such documents are included in the fields searched

Electronic data base consulted during the international search (name of data base and, where practicable, search terms used)

CNTXT, ENTXTC, VCN, VEN, DWPI, CNKI, 3GPP: PTRS, 相位追踪参考信号, 相位跟踪参考信号, 参数, 发送, 接收, port, 端口, DMRS, 解调参考信号, 频域资源偏移, FD-OCC, 频域正交覆盖码, EPRE, 每资源单位能量, PUSCH, PDSCH, 物理上行共享信道, 物理下行共享信道,

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 111527729 A (TELEFONAKTIEBOLAGET LM ERICSSON (PUBL)) 11 August 2020 (2020-08-11)<br>description, paragraphs [0179]-[0495] | 1-49 |
| A | CN 108111272 A (ZTE CORP.) 01 June 2018 (2018-06-01)<br>entire document | 1-49 |
| A | US 2022353033 A1 (SAMSUNG ELECTRONICS CO., LTD.) 03 November 2022 (2022-11-03)<br>entire document | 1-49 |
| A | WO 2022237789 A1 (VIVO MOBILE COMMUNICATION CO., LTD.) 17 November 2022 (2022-11-17)<br>entire document | 1-49 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **11 March 2024** | **18 March 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/071766**

| Patent document cited in search report | | | Publication date (day/month/year) | Patent family member(s) | | | Publication date (day/month/year) |
|---|---|---|---|---|---|---|---|
| CN | 111527729 | A | 11 August 2020 | CA | 3082587 | A1 | 23 May 2019 |
| | | | | US | 2020366436 | A1 | 19 November 2020 |
| | | | | KR | 20200081451 | A | 07 July 2020 |
| | | | | US | 2019215118 | A1 | 11 July 2019 |
| | | | | EP | 3711271 | A1 | 23 September 2020 |
| | | | | ES | 2908256 | T3 | 28 April 2022 |
| | | | | BR | 112020009649 | A2 | 10 November 2020 |
| | | | | JP | 2021503805 | A | 12 February 2021 |
| | | | | RU | 2754431 | C1 | 02 September 2021 |
| | | | | WO | 2019096919 | A1 | 23 May 2019 |
| | | | | MX | 2020005098 | A | 13 August 2020 |
| | | | | EP | 4009567 | A1 | 08 June 2022 |
| | | | | DK | 3711271 | T3 | 31 January 2022 |
| | | | | CO | 2020006136 | A2 | 29 May 2020 |
| | | | | PL | 3711271 | T3 | 25 April 2022 |
| | | | | US | 2023103846 | A1 | 06 April 2023 |
| | | | | IN | 201817045114 | A | 14 August 2020 |
| | | | | ZA | 202002952 | A | 24 November 2021 |
| CN | 108111272 | A | 01 June 2018 | EP | 4246867 | A2 | 20 September 2023 |
| | | | | EP | 3667978 | A1 | 17 June 2020 |
| | | | | MX | 2020001552 | A | 03 August 2020 |
| | | | | KR | 20220054449 | A | 02 May 2022 |
| | | | | US | 2023246754 | A1 | 03 August 2023 |
| | | | | US | 2020177416 | A1 | 04 June 2020 |
| | | | | JP | 2020529797 | A | 08 October 2020 |
| | | | | WO | 2019029378 | A1 | 14 February 2019 |
| | | | | US | 2023068244 | A1 | 02 March 2023 |
| | | | | RU | 2729213 | C1 | 05 August 2020 |
| | | | | KR | 20200035300 | A | 02 April 2020 |
| | | | | US | 2023239090 | A1 | 27 July 2023 |
| | | | | IN | 202047007534 | A | 28 February 2020 |
| US | 2022353033 | A1 | 03 November 2022 | EP | 4080809 | A2 | 26 October 2022 |
| | | | | CN | 115243388 | A | 25 October 2022 |
| | | | | KR | 20220146297 | A | 01 November 2022 |
| WO | 2022237789 | A1 | 17 November 2022 | CN | 115334678 | A | 11 November 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310041751